# EUROPEAN PATENT SPECIFICATION

(11) **EP 4 412 384 B1**
(45) Date of publication and mention of the grant of the patent: **18.12.2024**
(21) Application number: 23154432.1
(22) Date of filing: 01.02.2023
(51) Int. Cl.: H04W 76/12, H04W 40/00, H04L 45/00

(54) **METHOD FOR USING A USER EQUIPMENT WITH AT LEAST ONE TELECOMMUNICATIONS NETWORK, USER EQUIPMENT, SYSTEM OR TELECOMMUNICATIONS NETWORK, PROGRAM AND COMPUTER-READABLE MEDIUM**
VERFAHREN ZUR NUTZUNG EINES NUTZERENDGERÄTES MIT MINDESTENS EINEM TELEKOMMUNIKATIONSNETZ, NUTZERENDGERÄT, SYSTEM ODER TELEKOMMUNIKATIONSNETZ, PROGRAMM UND COMPUTERLESBARES MEDIUM
PROCÉDÉ D'UTILISATION D'UN ÉQUIPEMENT UTILISATEUR AVEC AU MOINS UN RÉSEAU DE TÉLÉCOMMUNICATION, ÉQUIPEMENT UTILISATEUR, SYSTÈME OU RÉSEAU DE TÉLÉCOMMUNICATION, PROGRAMME ET SUPPORT LISIBLE PAR ORDINATEUR

(43) Date of publication of application: 07.08.2024
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- WO-A1-2020/072079
- WO-A2-2021/016631
- US-A1- 2017 317 894

## Description

### BACKGROUND

The present invention relates a method for using a user equipment with at least one telecommunications network, wherein the user equipment is connected to the telecommunications network using an access network of the telecommunications network and the telecommunications network further comprising a core network to which the user equipment is connected, wherein the user equipment is used with the telecommunications network by means of transmitting and/or receiving user plane data and control plane data, wherein, regarding user plane data exchanged between the user equipment and the telecommunications network, at least either a first user plane mode of operation or a second user plane mode of operation is able to be used for a given access technology.

Furthermore, the present invention relates to a user equipment for being operated with at least one telecommunications network, wherein the user equipment is connected to the telecommunications network using an access network of the telecommunications network and the telecommunications network further comprising a core network to which the user equipment is connected, wherein the user equipment is used with the telecommunications network by means of transmitting and/or receiving user plane data and control plane data, wherein, regarding user plane data exchanged between the user equipment and the telecommunications network, at least either a first user plane mode of operation or a second user plane mode of operation is able to be used for a given access technology.

Additionally, the present invention relates to a system or telecommunications network for using a user equipment with the telecommunications network, wherein the user equipment is connected to the telecommunications network using an access network of the telecommunications network and the telecommunications network further comprising a core network to which the user equipment is connected, wherein the user equipment is used with the telecommunications network by means of transmitting and/or receiving user plane data and control plane data, wherein, regarding user plane data exchanged between the user equipment and the telecommunications network, at least either a first user plane mode of operation or a second user plane mode of operation is able to be used for a given access technology.

Furthermore, the present invention relates to a program and to a computer-readable medium for using a user equipment with the telecommunications network according to the inventive method.

In conventionally known telecommunications networks, it is known to use segment routing (SR) as a variant of source routing. In a segment-routed network, an ingress node may prepend a header to data packets that contain a list of segments, which are instructions that are executed on subsequent nodes in the network. These instructions may be forwarding instructions, such as an instruction to forward a packet to a specific destination or interface.

In the case of SRv6, segment routing is combined with the IPv6 (internet protocol version 6) protocol, where it is possible for a data packet (typically comprising some payload data) to comprise a plurality of different IPv6 headers (such as IPv6 header 1, IPv6 header 2, ... , IPv6 header N), wherein by means of each IPv6 header a corresponding action is indicated, e.g. an action 1 for IPv6 header 1, e.g. "apply quality-of-service", an action 2 for IPv6 header 2, e.g. "route via router A", ... , an action N for IPv6 header N, e.g. "route via router B", and the like. Thereby, network elements are able to add and/or to remove (push and/or pop) SRv6 headers based on network-defined logic, thereby especially reducing statefulness of network elements during network transit of data packets. In this context WO 2020/072079 A1 describes methods for SRv6 service delivery in end-to-end fashion with collaboration across different control planes of a fifth-generation environment. It has already been proposed to use segment routing to replace the GTP-U encapsulation protocol used in the N3 interface between the (radio) access network (AN, RAN) and the core network (CN) of a telecommunications network or of a mobile communication network, which GTP-U encapsulation protocol transports user plane traffic on its way to and/or from a data network (DN). The N3 interface is located between the access network (e.g. radio access network) and the core network user plane processing function, which in the case of a 5G network is the user plane function, UPF.

Between the UE and the AN (and in case of a 5G system - new radio, NR), the user plane stack, e.g., comprises, above the physical layer, the MAC layer, the RLC layer, the PDCP layer, and the service data adaptation protocol, SDAP, layer according to TS 38.300. Between the UE and the AN (and in case of a 5G system - untrusted non-3GPP Access), the user plane stack, e.g., comprises, above the physical layer, the MAC layer, the internet protocol, IP, layer, internet protocol security, IPsec, layer, generic routing encapsulation, GRE, layer according to TS 23.501.

On the reverse side (AN-UE), the reverse process is performed.

However, providing connectivity is a more complex issue and it often involves a plurality of operators and devices, often having different or divergent capabilities, e.g., - besides the telecommunications network to which the user equipment is directly connected - a further telecommunications network acting as the home network to the user equipment (roaming scenario of the user equipment). In the general context of exposing service capabilities to external entities US 2017/0317894 A1 describes a method for providing a mechanism for a communication network to expose its quality of service capabilities to entities outside of the communication network Furthermore, user needs may be location-dependent (e.g. a campus network or a network slice within a specific location may provide different capabilities than the nationwide network outside thereof).

### SUMMARY

An object of the present invention is to provide a technically simple, effective and cost effective solution for using a user equipment with at least one telecommunications network, wherein user plane data are able to be exchanged between the user equipment and the telecommunications network by means of using at least either a first user plane mode of operation or a second user plane mode of operation for a given access technology. A further object of the present invention is to provide a corresponding user equipment, system or telecommunications network, and a corresponding program and computer-readable medium.

The object of the present invention is achieved by a method according to claim 1.

According to the present invention, it is advantageously possible that different user plane modes of operation are possible or able to be applied regarding user plane data being exchanged between the user equipment and the telecommunications network, and this in response to or in dependance on capability information being sent by the user equipment (and received by the telecommunications network) relating to the capability of the user equipment to apply or to use the first user plane mode of operation and/or the second user plane mode of operation. An analogous exchange (or transmission) of capability information is, according to the present invention, also envisaged regarding different telecommunications networks (e.g. between a visited network and a home network of the user equipment). Hence, according to the present invention, the operation on one or multiple networks of a combination of user plane modes of operation and the exchange of corresponding or related capability information is advantageously possible. It is thereby advantageously possible that a user plane mode of operation is associated with a user plane protocol stack, combination of user plane and control plane protocol stacks, configuration of user plane protocol stack, or configuration of control and user plane protocol stacks such that transmission and/or reception of user plane data is realized via a specific and/or specifically configured protocol stack(s). It is thereby advantageously possible that the simultaneous use of legacy user plane modes of operation (especially GTP-U-based) and also of more efficient SR-based user plane modes of operation, especially SRv6, is enabled without service degradation for legacy users.

Hence, according to the present invention, it is advantageously possible to provide for a signaling of a segment routing capability for (or regarding) the user equipment and/or the (visited) access network (i.e. of the visited network of the user equipment, V-PLMN AN) and/or the (visited) core network (i.e. of the visited network of the user equipment, V-PLMN CN) and/or the (home) core network (i.e. of the home network of the user equipment, H-PLMN CN) so that the user equipment is especially able to be aware whether (or not) SRv6 is usable and/or whether (or not) two core networks (e.g. the ones of the visited and the home network of the user equipment) can know whether SRv6 is usable.

Furthermore, it is advantageously possible according to the present invention that a conditional header manipulation of uplink/downlink data packets is able to be applied on the user equipment (or by the user equipment), whereas the conditions are especially based on location parameters, time parameters and/or network parameters. It is furthermore advantageously possible that given a partially overlapping support of user plane modes of operation, a common user plane mode of operation can be chosen end-to-end, E2E, e.g. between user equipment, visited network and home network such that the need for user plane translation and/or encapsulation/decapsulation can be minimized or even removed. It is furthermore advantageously possible that given a partially overlapping support of user plane modes of operation among different access technologies supported by a user equipment, a common user plane mode of operation is chosen for all access technologies supported by the user equipment, such that mobility and/or handover of user plane between different access technologies can be seamlessly realized.

In a conventional telecommunications network, a common use case in roaming is that of network slice mapping, whereas different network slice identifiers are used in the visited public land mobile network, V-PLMN, of the user equipment and in the home public land mobile network, H-PLMN, of the user equipment for a given service. In such a case, the user equipment (subscribed to the H-PLMN) receives a network slice mapping information informing it of the mapping between a H-PLMN network slice and a V-PLMN network slice. Furthermore, regarding the communication between the visited and home public land mobile networks, the 5G architecture defines - regarding control plane communication or data exchange - a secure element enabling secure and authenticated exchange of control plane information between the networks: the secure edge protection proxy (SEPP), cf. especially TS 23.501, clause 4.2.4. Regarding user plane communication or data exchange, 5G defines an inter PLMN user plane security (IPUPS) functionality, which can be deployed at the border of the respective networks to protect the respective networks from invalid inter-PLMN N9 traffic. The IPUPS functionality forwards GTP-U packets (received via the N9 interface) only if they belong to an active PDU Session and are not malformed, as described in TS 33.501.

According to the present invention, it is advantageously possible that a user equipment is used with at least one telecommunications network (but typically, especially in a roaming situation, with two or more telecommunications networks). The user equipment is connected to the (visited or home) telecommunications network using an access network thereof (i.e. an access network, or radio access network, of the telecommunications network or assigned to or associated with the telecommunications network), and, of course, the telecommunications network furthermore also comprises a core network to which the user equipment is connected.

The user equipment is used with the telecommunications network (or with the (radio) access network (thereof)) by means of transmitting and/or receiving user plane data and control plane data, wherein, regarding user plane data exchanged between the user equipment and the telecommunications network (or the (radio) access network (thereof)), at least either a first (or legacy) user plane mode of operation or a second (or non-legacy, i.e. segment routing-related) user plane mode of operation is able to be used for a given access technology.

In such a situation, according to the present invention, the user equipment transmits a capability information to the telecommunications network (or, rather or more specifically, to its (radio) access network), the capability information being related to the capability of the user equipment to apply or to use the first user plane mode of operation and/or the second user plane mode of operation. As a result thereof (i.e. of the transmission of the capability information transmitted by the user equipment, and irrespective of the form of such transmission or the kind of message transporting such capability information), either the first user plane mode of operation or the second user plane mode of operation is applied (especially between the user equipment and the access network) in accordance with the capability information.

Especially according to the present invention, it is to be understood that the use of at least either a first (or legacy) user plane mode of operation or a second (or non-legacy, i.e. segment routing-related) user plane mode of operation (regarding user plane data exchanged between the user equipment and the telecommunications network (or the (radio) access network (thereof))) is able to be used not only in dependency of a given access technology but also in dependency of a specific packet data unit session, i.e. in two different packet data unit sessions it might be possible (for one and the same user equipment) to apply different user plane modes of operation (e.g. the first user plane mode of operation in a first packet data unit session and the second user plane mode of operation in a second packet data unit session) - i.e. in such an implementation of the present invention:
-- the user equipment is used with the telecommunications network by means of transmitting and/or receiving user plane data and control plane data, wherein, regarding user plane data exchanged between the user equipment and the telecommunications network in a specific packet data unit session, at least either a first user plane mode of operation or a second user plane mode of operation is able to be used for a given access technology, and
-- in the second step (i.e. after transmission of the capability information), the first user plane mode of operation or the second user plane mode of operation is applied to the specific packet data unit session logical data channel or user plane data stream or channel in accordance with the capability information.

According to the present invention, it is furthermore advantageously possible and preferred that the user equipment is either capable of applying or using:
-- the first user plane mode of operation only, or
-- the first user plane mode of operation, or, alternatively, the second user plane mode of operation, or
-- the second user plane mode of operation only,
   which is indicated by means of the capability information, wherein especially the capability information additionally indicates
-- a preferred user plane mode out of the first and second user plane modes of operation,
-- conditional application and/or preference of a given user plane mode, especially the applicability to a given slice, time and/or location,
-- conditional application and/or preference of a given user plane mode for a given application or service, especially the applicability to local, home and/or roaming service, and/or
-- conditional application and/or preference of a given user plane mode for a given type of traffic, especially internet protocol and ethernet traffic.

Furthermore, it is advantageously possible and preferred according to the present invention to support that only part of the access network, especially specific tracking areas, TAs, and/or locations, support a given user plane mode, such that the conditional application of the given user plane mode is restricted to that part of the access network. It is similarly advantageously possible and preferred according to the present invention to support that only a given slice or set of slices supports a given user plane mode such that the conditional application of the given user plane mode is restricted to elements serving the given slice or set of slices.

It is thereby advantageously possible to realize and implement the inventive method in a comparatively simple and efficient manner.

According to the present invention, it is furthermore advantageously possible and preferred that the first user plane mode of operation corresponds to, or relies on, radio link control, RLC, packet data convergence protocol, PDCP, or using the service data adaptation protocol, SDAP, or a variant thereof. According to the invention, the second user plane mode of operation corresponds to, or relies on, a segment routing protocol, especially the segment routing version 6 protocol, SRv6.

It is thereby advantageously possible to realize and implement the inventive method in a comparatively simple and efficient manner.

Furthermore, it is advantageously possible and preferred according to the present invention that the user plane protocol between the access network, especially a gNB, and the core network, especially a user plane function, UPF, is chosen based on the applied user plane mode of operation used between the user equipment and the access network, especially when the first user plane mode of operation is associated to the GPRS tunneling protocol, GTP.

It is thereby advantageously possible to efficiently realize and implement the inventive method in a comparatively simple and flexible manner

Furthermore, it is advantageously possible and preferred according to the present invention that, besides the user equipment, a further user equipment is connected to the telecommunications network and wherein the further user equipment transmits a further capability information to the telecommunications network, the further capability information being related to a further capability of the further user equipment to apply or to use the first user plane mode of operation and/or the second user plane mode of operation, wherein, especially in case that the capability information and the further capability information differ, the first user plane mode of operation is applied in accordance with the capability information, and the second user plane mode of operation is applied in accordance with the further capability information, or vice versa, between the user equipments and the telecommunications network.

It is thereby advantageously possible to realize and implement the inventive method in a comparatively simple and efficient manner, where - regarding different user equipments - different user plane modes of operation are possible to be used or applied.

Furthermore, it is advantageously possible and preferred according to the present invention that the capability information is transmitted, by the user equipment to the telecommunications network, by means of, or upon, at least one out of the following:
-- the user equipment registering at or with the telecommunications network, especially as part of connection capabilities,
-- a packet data unit session, PDU session, establishment request of the user equipment,
   -- a radio resource management, RRM, message,
   -- a non-access stratum, NAS, message,
wherein especially - especially subsequent to the transmission, by the user equipment, of the capability information to the telecommunications network - the telecommunications network transmits an indication regarding the user plane mode of operation to be used or to be applied by the user equipment,
wherein especially the indication which user plane mode of operation to use is transmitted, to the user equipment, by means of or as part of a packet data unit session establishment accept message, a user equipment registration accept message, a radio resource management, RRM, message or a non-access stratum, NAS, message.

It is thereby advantageously possible to realize and implement the inventive method in a comparatively simple and efficient manner.

Furthermore, it is advantageously possible and preferred according to the present invention that a further telecommunications network, connected to the telecommunications network is serving the user equipment, especially as a home network, wherein, regarding user plane data exchanged between the telecommunications network and the further telecommunications network, at least either the first user plane mode of operation or the second user plane mode of operation is able to be used for a given access technology,
wherein either
-- the further telecommunications network transmits a network capability information to the telecommunications network, the network capability information being related to a capability of the further telecommunications network to apply or to use the first user plane mode of operation and/or the second user plane mode of operation, this resulting in either the first user plane mode of operation or the second user plane mode of operation being applied in accordance with the network capability information between the telecommunications network and the further telecommunications network, or
-- the telecommunications network transmits a network capability information to the further telecommunications network, the network capability information being related to a capability of the telecommunications network to apply or to use the first user plane mode of operation and/or the second user plane mode of operation, this resulting in either the first user plane mode of operation or the second user plane mode of operation being applied in accordance with the network capability information between the telecommunications network and the further telecommunications network, or
-- the telecommunications network transmits a network capability information to the further telecommunications network, the network capability information being related to a capability of the telecommunications network to apply or to use the first user plane mode of operation and/or the second user plane mode of operation, this resulting in either the first user plane mode of operation or the second user plane mode of operation being applied in accordance with the network capability information between the telecommunications network and the further telecommunications network.

It is thereby advantageously possible to realize and implement the inventive method in a comparatively simple and efficient manner. `

Furthermore, it is advantageously possible and preferred according to the present invention that a further telecommunications network, connected to the telecommunications network is serving the user equipment, especially as a home network, wherein, regarding user plane data exchanged between the user equipment and the further telecommunications network, at least either the first user plane mode of operation or the second user plane mode of operation is able to be used for a given access technology,
wherein the user equipment transmits the capability information also to the further telecommunications network, the capability information being related to the capability of the user equipment to apply or to use the first user plane mode of operation and/or the second user plane mode of operation, this resulting in either the first user plane mode of operation or the second user plane mode of operation being applied in accordance with the capability information between the user equipment and the further telecommunications network.

It is thereby advantageously possible to realize and implement the inventive method in a comparatively simple and efficient manner.

Furthermore, according to the present invention that in case that the second user plane mode of operation is used, at least one out of the following applies:
-- the telecommunications network, especially a network node of the access network and/or of the core network, signals to the user equipment the segment routing-related functionality,
-- the user equipment adds segment routing header information to uplink traffic, especially according to a logic signaled by the telecommunications network, especially a specific segment routing header information is added and/or a data packet processing logic applied to specific traffic in case of a given time and/or a given location and/or given network conditions being met,
-- the user equipment removes segment routing header information from downlink traffic, especially removes specific segment routing header information and applies data packet processing logic, especially for specific traffic in case of a given time and/or a given location and/or given network conditions being met,
-- the user equipment applies, to either uplink or downlink traffic, packet processing logic to matching traffic, especially to data packets with a given segment routing header information,
-- the user equipment applies a mapping between packet data unit sessions, quality-of-service flows or quality-of-service subflows and/or application traffic and one or more pieces of segment routing header information.

It is thereby advantageously possible to realize and implement the inventive method in a comparatively simple and efficient manner.

Furthermore, the present invention relates to a user equipment according ot claim 10.

Furthermore, the present invention relates to a system or telecommunications network according to claim 11.

Additionally, the present invention relates to a program comprising a computer readable program code which, when executed on a computer and/or on a user equipment and/or on a network node of a telecommunications network, especially a control plane and/or user plane function, or in part on the user equipment and/or in part on the network node of a telecommunications network, especially the control plane function and/or user plane function, causes the computer and/or the user equipment and/or the network node of the telecommunications network to perform the inventive method.

Additionally, the present invention relates to a computer-readable medium comprising instructions which when executed on a computer and/or on a user equipment and/or on a network node of a telecommunications network, especially a control plane function and/or user plane function, or in part on the user equipment and/or in part on the network node of a telecommunications network, especially the control plane function and/or user plane function, causes the computer and/or the user equipment and/or the network node of the telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

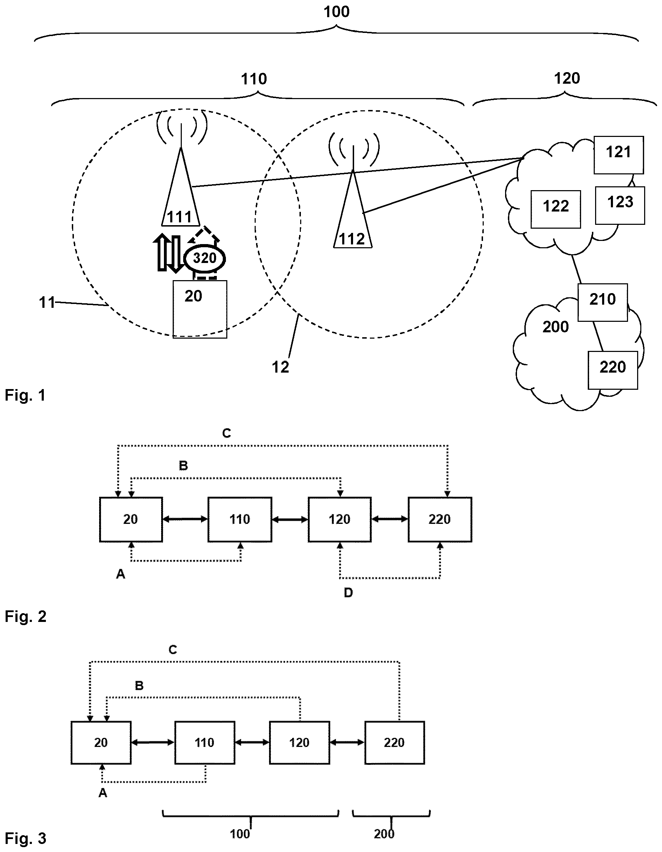

Figure 1 schematically illustrates a telecommunications network comprising an access network, a core network and a user equipment, wherein the core network typically comprises a number of network functions or services, and wherein - regarding user plane data exchanged between the user equipment and the telecommunications network, and especially regarding a specific packet data unit session - at least either a first user plane mode of operation or a second user plane mode of operation is able to be used for a given access technology, and wherein regarding such a use of user plane modes of operation capability information is transmitted, by the user equipment, to the telecommunications network; exemplarily, Figure 1 also represents a further telecommunications network connected to the telecommunications network.
Figure 2 schematically illustrates different interfaces or reference points - between different parts of a plurality of telecommunications networks - where capability information is susceptible to be transmitted according to the present invention in order to at least either use a first user plane mode of operation or a second user plane mode of operation for a given access technology in order to exchange user plane data between the user equipment and the telecommunications network(s) and/or between different parts or networks of the telecommunications networks.
Figure 3 schematically illustrates different interfaces or reference points - between different parts of a plurality of telecommunications networks - where segment routing header information is susceptible to be transmitted according to the present invention in order to define how the second user plane mode of operation is to be implemented.

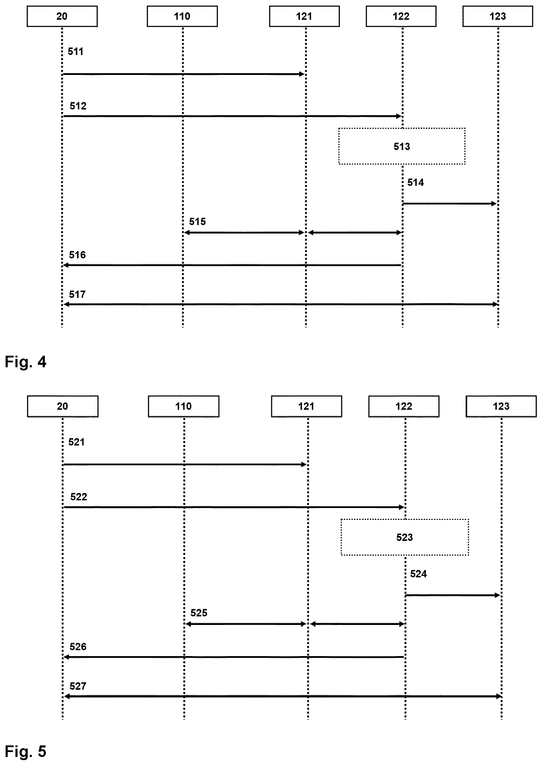

Figure 4 schematically illustrates a communication diagram between the user equipment and network nodes or elements of the telecommunications network, showing how the second user plane mode of operation is susceptible to be used between the user equipment and the telecommunications network.
Figure 5 schematically illustrates a communication diagram between the user equipment and network nodes or elements of the telecommunications network, showing how the first user plane mode of operation is susceptible to be used between the user equipment and the telecommunications network.

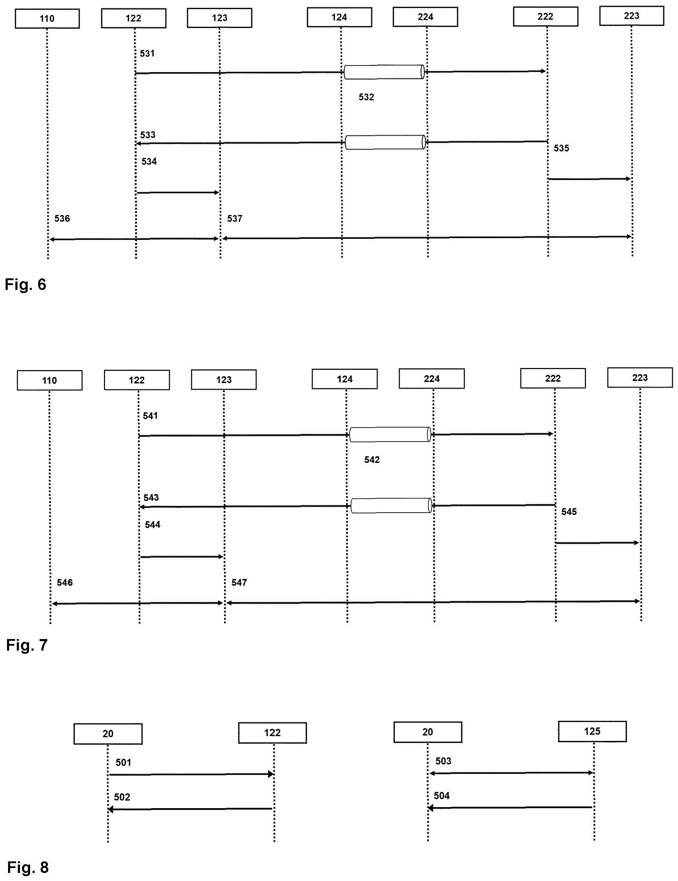

Figure 6 schematically illustrates a communication diagram between the user equipment, network nodes or elements of the telecommunications network, and network nodes or elements of the further telecommunications network, showing how the second user plane mode of operation is susceptible to be used between at least a part of the transmission hops between the user equipment, the telecommunications network, secure edge protection proxy nodes, and the further telecommunications network.
Figure 7 schematically illustrates a communication diagram between the user equipment, network nodes or elements of the telecommunications network, and network nodes or elements of the further telecommunications network, showing how the first user plane mode of operation is susceptible to be used between at least a part of the transmission hops between the user equipment, the telecommunications network, secure edge protection proxy nodes, and the further telecommunications network.
Figure 8 schematically illustrates different possibilities how the segment routing header information - or mapping information - is susceptible to be transmitted between different network elements or components, and especially towards the user equipment.

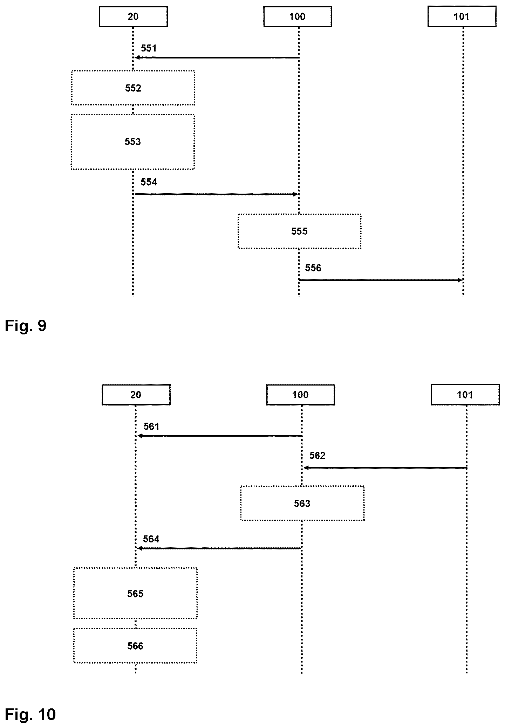

Figure 9 schematically illustrates a communication diagram between the user equipment, the telecommunications network, and a data network, showing how the second user plane mode of operation is susceptible to be implemented regarding uplink traffic from the user equipment towards the telecommunications network.
Figure 10 schematically illustrates a communication diagram between the user equipment, the telecommunications network, and a data network, showing how the second user plane mode of operation is susceptible to be implemented regarding downlink traffic from the telecommunications network towards the user equipment.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 as well as connected to a user equipment 20 is schematically shown, wherein - regarding user plane data exchanged between the user equipment and the telecommunications network, and especially regarding a specific packet data unit session - at least either a first user plane mode of operation or a second user plane mode of operation is able to be used for a given access technology, and wherein regarding such a use of user plane modes of operation capability information 320 is transmitted, by the user equipment, to the telecommunications network 100. The telecommunications network 100 is especially realized as a mobile (cellular) communication network 100 (and is, hereinafter and at least partly, also called like this). The telecommunications network 100, especially the core network 120, typically comprises a number of network functions or services, wherein of these, Figure 1 exemplarily shows an access and mobility management function 121 of the telecommunications network 100, a session management function 122, and a user plane function 123.

The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 is connected to the telecommunications network 100 via a radio interface to the first base station entity 111 (and the user plane data being exchanged between the user equipment 20 and the telecommunications network 100 schematically being indicated by means of two opposed arrows between the user equipment 20 and the first base station entity 111).

The user equipment 20 is typically, but not necessarily, mobile - i.e. able to move - with respect to the - typically, but not necessarily, static - radio cells 11, 12 or corresponding base station entities 111, 112 of the access network 110. Especially, the user equipment 20 might comprise an application (not specifically depicted in Figure 1) as part of the user equipment 20; the application typically runs on the user equipment 20, i.e. the user equipment 20 typically runs or executes an operating system (such as a mobile (devices) operating system, e.g., android, iOS, iPadOS, etc.), and the application is running on the operating system; alternatively, the application might also be a lower level application not running on or as part of the operating system but as part of, e.g., the subscriber identity module of the user equipment 20.

Exemplarily, Figure 1 also represents a further telecommunications network 200 connected to the telecommunications network 100, and the further telecommunications network 200 also comprising an access and core network, hereinafter called further access network 210 (designated by means of reference sign 210) and further core network 220 (designated by means of reference sign 220).

In conventionally known telecommunications networks, the use of GTP-U encapsulation used in the N3 interface (between the (radio) access network and the core network of a telecommunications network, especially for the transport of user plane traffic on its way to and/or from a data network DN) is established, and it has already been proposed to use segment routing to replace the GTP-U encapsulation protocol. In a segment-routed network, an ingress node may prepend a header to data packets that contain a list of segments, which are instructions that are executed on subsequent nodes in the network. These instructions may be forwarding instructions, such as an instruction to forward a packet to a specific destination or interface. In the case of SRv6, segment routing is combined with the IPv6 (internet protocol version 6) protocol.

However, providing connectivity to the user equipment 20 often involves a plurality of operators and devices (such as, e.g., the further telecommunications network 200, e.g. acting, in a roaming scenario of the user equipment 20, as home network to the user equipment 20).

The present invention therefore proposes to apply - regarding user plane data being exchanged between the user equipment 20 and the telecommunications network 100 - different user plane modes of operation in response to or in dependance on capability information being sent by the user equipment 20 (and received by the telecommunications network 100) relating to the capability of the user equipment 20 to apply or to use these user plane modes of operation. Basically according to the present invention, a first user plane mode of operation and/or at least a second user plane mode of operation are possible to be applied (for a given access technology and especially in a specific packet data unit session), wherein, of course, for a specifically considered packet data unit session (or logical data channel or user plane data stream) only either the first or the second user plane mode of operation is able to be applied, and not both for the same packet data unit session and/or the same logical data channel or data stream. In this respect, "user plane mode of operation" should not be mixed up with "packet data unit session type": While a packet data unit session may transmit traffic of type IP, ethernet or others, said user plane is transmitted in the same way, that is, via GTP-U encapsulation. The user plane mode of operation relates to how the user plane is transmitted, not the payload type being transported.

An analogous exchange (or transmission) of capability information is, according to the present invention, also envisaged regarding different telecommunications networks (e.g. between a visited network and a home network of the user equipment, e.g. the telecommunications network 100 and the further telecommunications network 200). Hence, according to the present invention, the operation on one or multiple networks of a combination of user plane modes of operation and the exchange of corresponding or related capability information is advantageously possible.

The different possibilities where capability information is susceptible to be transmitted according to the present invention are schematically illustrated in Figure 2, which schematically illustrates different interfaces or reference points - between different parts of a plurality of telecommunications networks 100, 200 - for such an exchange, or a transmission, of capability information. Specifically, Figure 2 shows the user equipment 20, the access network 110 (especially of the telecommunications network 100 acting as visited network), the core network 120 (especially of the telecommunications network 100 acting as visited network), and the further core network 220 (especially of the further telecommunications network 200 acting as home network of the user equipment 20). Reference sign A designates the transmission of capability information 320 between the user equipment 20 and the access network 110, especially the transmission of (user equipment-related) capability information 320 towards the access network 110. Reference sign B designates the transmission of capability information 320 between the user equipment 20 and the core network 120, especially the transmission of (user equipment-related) capability information 320 towards the core network 120. Reference sign C designates the transmission of capability information 320 between the user equipment 20 and the further core network 220, especially the transmission of (user equipment-related) capability information 320 towards the further core network 220. Reference sign D designates the transmission of capability information between the core network 120 (of the telecommunications network 100) and the further core network 220 (of the further telecommunications network 200).

By means of transmitting such capability information, especially user equipment-related capability information 320, it is advantageously possible, according to the present invention, to enable the user equipment 20 in the telecommunications network 100 to realize multiple user plane modes, including, e.g., a SRv6 user plane mode, in multi-network setups.

Thus, the segment routing capabilities, if present, are able to be signaled. The Introduction of a segment routing-based user plane mode (second user plane mode of operation) as a new user plane requires architectural changes in how user equipments and network elements are designed and how data packets are processed. On the other hand, flexibly usable means to provide for backward-compatibility are required; a network or user equipment supporting both segment routing-based and legacy-based (GTP-U/SDAP) user plane modes of operation can thus be considered as having more than one user plane mode of operation.

Hence especially, according to the present invention, a solution is provided how to enable the user equipment 20 to use multiple user plane modes of operation, especially to enable the user equipment 20 to be part of the SRv6 logic in a backwards-compatible manner, especially in multi-network setups such as roaming, which advantageously has the potential to allow the user equipment 20 to offload user plane processing from the network, especially the access network (no GTP-U encapsulation needed, reduced packet processing load) and the user plane function 123 (reduced packet processing load). Furthermore, the present invention allows for current (legacy) user equipments to still make use of such networks (being able to apply, e.g., SRv6 logic), i.e. according to the present invention, there is no service degradation to current users.

Hence, Figure 2 shows how to flexibly apply this functionality of capability indication, or capability signaling, especially from the user equipment 20 towards the network (telecommunications network 100 or further telecommunications network 200), i.e. whether segment routing header functionality is supported (or not), and as well between communicating the networks 100, 200.

According to the present invention, multiple user plane modes of operation - i.e. to exchange user plane traffic between the user equipment 10 and the telecommunications network 100 - are supported, especially comprising network-based steering, via the control plane, so that the most optimum user plane mode of operation is able to be used based on network and/or user equipment capabilities and such that backwards-compatibility is able to be ensured. Especially - regarding uplink traffic and regarding each individual traffic stream or logical data channel - it is decided, within the user equipment 20, which one of a plurality of different user plane modes of operation is to be used or applied for such uplink traffic towards the access network 110 and/or the core network 120.

The capability information 320 that the user equipment 20 transmits, according to the present invention, to the access network 110 and/or the core network 120 of the telecommunications network 100 preferably indicates that the user equipment 20 is either capable of applying or using:
-- the first user plane mode of operation only, or
-- the first user plane mode of operation, or, alternatively, the second user plane mode of operation, or
-- the second user plane mode of operation only.

Preferably, the capability information 320 additionally indicates (especially in case that both user plane modes of operation are possible) a preferred user plane mode of operation out of the first and second user plane modes of operation.

It is furthermore preferred that, cumulatively or alternatively, the capability information 320 indicates conditional application and/or preference of a given user plane mode of operation, especially the applicability to (or, the dependency of a conditional application and/or a preference of a given user plane mode of operation from) a given time and/or location and/or a given application or service (especially the applicability to local, home and/or roaming service), and/or a given type of traffic (especially internet protocol and ethernet traffic).

According to the present invention, it is advantageously possible to provide inter-operability between different kinds of user equipments and between different kinds of networks, especially including:
-- legacy user equipments that, e.g., only support the legacy (SDAP) protocol stack (i.e. the first user plane mode of operation only), and even if the network would support SR-based user plane (i.e. the second user plane mode of operation), the user equipment can't, hence the network should use legacy user plane transmission (be able to switch or to adapt towards using the legacy protocol (first user plane mode of operation);
-- user equipments and the corresponding network actually supporting SR-based user plane transmission (i.e. the second user plane mode of operation), however unfortunately, the interconnection with the corresponding H-PLMN (e.g. via an IPX) does not support SRv6; in such a situation, it is possible for the user equipment and the V-PLMN to use SR-based user plane (i.e. the second user plane mode of operation), but in order to exchange traffic with the H-PLMN, the V-PLMN must convert the SRv6 traffic (i.e. the second user plane mode of operation) to GTP-U (i.e. the first user plane mode of operation) and vice-versa;
-- a further situation arises in case that not all network elements in a given (e.g. visited) network support SR-based user plane (i.e. the second user plane mode of operation); while some user plane functions (UPF or User Plane Function in 5GS being responsible for user plane, similar to S-GW-U/P-GW-U in EPS) may support SRv6, others may not (thus, resulting in an analogous situation as described before where the H-PLMN (or an IPX) does not support SRv6); similarly, an operator may decide to map a given network slice (S-NSSAI) or DNN to SRv6 user plane and have others mapped to use only legacy user plane.

Hence for the case of a roaming-like situation of the user equipment 20, having a H-PLMN registration (towards the further telecommunications network 200) and being connected to the telecommunications network 100 obtaining connectivity towards a data network (DN) in a roaming-like situation:
-- segment routing-based user plane (second user plane mode of operation) is supported by the user equipment 20, the telecommunications network 100, and the further telecommunications network 200 (i.e. all networks in the path; situation A), or
-- the user equipment 20 and the network used for access (V-PLMN, telecommunications network 100) support segment routing-based user plane (second user plane mode of operation), but the roaming interconnection (further telecommunications network 200) does not (hence, at the interface between the telecommunications network 100 and the further telecommunications network 200 traffic needs to be converted) situation B, or
-- while the V-PLMN (telecommunications network 100) may support SR-based user plane (second user plane mode of operation), neither the user equipment 20 nor the home network (further telecommunications network 200) it, hence the first user plane mode of operation needs to be used between the user equipment 20 via the visited network 100 towards the home network (and potentially also towards the data network) situation C.

This results in - dependent on the user plane capabilities of the transmission nodes (or networks) involved - the following typical or basic setups regarding the most efficient data plane with regards of usage of segment routing-based functionality:
-- for situation A, an end-to-end segment routing-based user plane (second user plane mode of operation), with segment routing headers covering functionality for the V-PLMN, routing towards the H-PLMN and also for the H-PLMN routing,
-- for situation B, segment routing support is used where possible, such that the user equipment 20 uses a segment routing-based user plane while the interconnection to the H-PLMN is based on legacy protocols (i.e. GTP-U),
-- for situation C, the conventionally known legacy protocol stack is used, with the user equipment 20 using SDAP (potentially GTP-U tunnels within the V-PLMN) and also legacy protocols in the interconnection with the H-PLMN - i.e. the first user plane mode of operation from the user equipment 20 towards the home network and perhaps until the data network.

In the following, it is described in detail, exemplarily how the first user plane mode of operation, or, alternatively, the second user plane mode of operation is used as a result of capability information being transmitted, by the user equipment 20, to the telecommunications network 100.

In order for the access network 110 and/or the core network 120 to be able to know whether the user equipment 20 supports more than one user plane mode of operation, the user equipment 20 signals this capability (e.g. when the user equipment 20 registers at the network 100 as part of connection capabilities). This could trigger the network 100 to implicitly assume that all PDU session establishment requests imply the signaled capabilities. Alternatively or cumulatively, the user equipment 20 can indicate the requested/preferred user plane mode of operation in the packet data unit session establishment request (e.g. one or more), which the network 100, based on its own capabilities and deployment (e.g. the requested slice may support only legacy user plane) can then accordingly reply to. Figure 4 shows the case when a user equipment 20 requests a given user plane mode of operation and it is granted, resulting in an end-to-end segment routing-based user plane. Figure 5 shows the case when the user equipment 20 is not granted its preferred/requested user plane mode of operation, but rather an alternative one, also supported by the user equipment 20 (fallback to legacy mode).

In Figure 4, a communication diagram between the user equipment 20 and network nodes or elements of the telecommunications network 100 is schematically and exemplarily shown, representing an example according to the present invention how the second user plane mode of operation is susceptible to be used between the user equipment 20 and the telecommunications network 100. Figure 4 explicitly shows the access and mobility management function 121, the session management function 122, and the user plane function 123 of the telecommunications network 100. In a first processing step 511, the user equipment 20 indicates (e.g. as part of a registration procedure) to the access and mobility management function 121 of the telecommunications network 100 that it supports both the first and second user plane mode of operation (i.e. especially both a segment routing-based and a GTP-U based user plane mode of operation). In a second processing step 512, a packet data unit session establishment request is sent, by the user equipment 20, to the session management function 122 of the telecommunications network 100, the packet data unit session establishment request comprising the request, that the second user plane mode of operation (e.g. SRv6) be used (regarding the specific packet data unit session considered or requested). In a third processing step 513, the session management function evaluates segment routing support, especially based on, e.g., the capabilities of the requested (or to be used) S-NSSAI and/or data network name, DNN, as well as the capabilities of the user plane function 123. In case that this evaluation results in these capabilities being present and ready, in a fourth processing step 514, the session management function 122 configures the user plane function 123 for the second user plane mode of operation (i.e. especially for a segment routing-based packet data unit session), and, in a fifth processing step 515, the session management function 122 configures the access network 110 (especially via the access and mobility management function 121) for the second user plane mode of operation (i.e. for a segment routing-based packet data unit session). In a sixth processing step 516, the session management function 122 transmits a packet data unit session establishment accept message to the user equipment 20, comprising an indication that the user plane mode of operation to be used corresponds to the second user plane mode of operation, i.e. especially the SRv6. Furthermore, the session management function 122 transmits to the user equipment 20 - especially as part of the packet data unit session establishment accept message - the relevant segment routing header information required to implement the segment routing-based user plane mode of operation. In a seventh processing step 517, the user plane communication is able to be conducted between the user equipment 20 and the user plane function 123, based on using the second user plane mode of operation using, or realizing, a segment routing-based N3 interface (or reference point).

In contrast, in Figure 5, a communication diagram (between, again, the user equipment 20 and network nodes or elements of the telecommunications network 100) is schematically and exemplarily shown, representing an example according to the present invention how the first user plane mode of operation is susceptible to be used between the user equipment 20 and the telecommunications network 100. Again, Figure 5 explicitly shows the access and mobility management function 121, the session management function 122, and the user plane function 123 of the telecommunications network 100.

In a first processing step 521, the user equipment 20 indicates (e.g. as part of a registration procedure) to the access and mobility management function 121 of the telecommunications network 100 that it supports both the first and second user plane mode of operation (i.e. especially both a segment routing-based and a GTP-U based user plane mode of operation). In a second processing step 522, a packet data unit session establishment request is sent, by the user equipment 20, to the session management function 122 of the telecommunications network 100, the packet data unit session establishment request comprising the request, that either one of the second user plane mode of operation (e.g. SRv6) or the first user plane mode of operation (GTP-U based) be used (regarding the specific packet data unit session considered or requested). In a third processing step 523, the session management function evaluates segment routing support, especially based on, e.g., the capabilities of the requested (or to be used) S-NSSAI and/or data network name, DNN, as well as the capabilities of the user plane function 123. In case that this evaluation results in these capabilities (regarding using the second user plane mode of operation) are lacking (i.e. not being present and ready), in a fourth processing step 524, the session management function 122 configures the user plane function 123 for the first user plane mode of operation (i.e. especially for a GTP-U based packet data unit session), and, in a fifth processing step 525, the session management function 122 configures the access network 110 (especially via the access and mobility management function 121) for the first user plane mode of operation (i.e. especially for a GTP-U based packet data unit session). In a sixth processing step 526, the session management function 122 transmits a packet data unit session establishment accept message to the user equipment 20, comprising an indication that the user plane mode of operation to be used corresponds to the first user plane mode of operation, i.e. especially GTP-U with legacy parameters. In a seventh processing step 527, the user plane communication is able to be conducted between the user equipment 20 and the user plane function 123, based on using the first user plane mode of operation, especially using, or realizing, a legacy N3 interface (or reference point), i.e. using SDAP/GTP-U.

In case that, the user equipment 20 had, in either the first processing step 521 or the second processing step 522, indicated that it supports only (or is only capable of) the first user plane mode of operation (i.e. especially a GTP-U based user plane mode of operation) or that it requests (as part of the packet data unit session establishment request of the second processing step 522) that the first user plane mode of operation (GTP-U based) be used (regarding the specific packet data unit session considered or requested), the evaluation, in the third processing step 523, would have needed to be conducted to verify that legacy support (especially GTP-U support) is available regarding the requested (or to be used) S-NSSAI and/or data network name, DNN, as well as regarding the user plane function 123; if this would have been verified, the fourth, fifth, sixth and seventh processing steps 524, 525, 526, 527 would have been conducted as described above.

It is possible, according to the present invention, that one and the same user equipment 20 requests different user plane modes of operation for different packet data unit sessions: E.g. for a first packet data unit session (of that user equipment 20, e.g. relating to a first application thereof), the packet data unit session establishment request (of the second processing step 522/512 as described above) comprises the indication that the first user plane mode of operation (GTP-U based) be used, and for a second packet data unit session (of that same user equipment 20, e.g. relating to a second application thereof), the packet data unit session establishment request (of the second processing step 522/512 as described above) comprises the indication that the second user plane mode of operation (segment routing-based) be used. It is then up to the telecommunications network 100 to decide (or to evaluate in the third processing step 523/513) which user plane mode of operation is to be used.

It is furthermore possible, according to the present invention, that - besides the user equipment 20 - a further user equipment (not shown) is connected to the telecommunications network 100 and transmits a further capability information to the telecommunications network 100 (analogously to the first and second processing steps 511/521, 512/522 - wherein, of course, the further capability information is related to a further capability of the further user equipment to apply or to use the first user plane mode of operation and/or the second user plane mode of operation) and that, in case that the capability information 320 and the further capability information differ, different user plane modes of operation are applied for the user equipment 20 and for the further user equipment.

In the following, it is described in detail, exemplarily how the first user plane mode of operation, or, alternatively, the second user plane mode of operation is used as a result of network capability information being transmitted between different telecommunications networks, especially taking into consideration the case of a roaming situation (of the user equipment 20), i.e. where the further telecommunications network 200 is connected to the telecommunications network 100 (and is serving the user equipment 20, especially as a home network): Regarding user plane data exchanged between the telecommunications networks 100, 200, at least either the first user plane mode of operation or the second user plane mode of operation is able to be used for a given access technology (and, especially, regarding a given packet data unit session or logical data channel or user plane data stream.

Hence, in case of inter-network connectivity, the typical case is that of roaming. In this case, session management functions (SMFs) from each network are responsible for setting up a user plane path between two user plane functions (UPFs). The session management function exchange typically occurs via secure edge protection proxies (SEPPs or inter-PLMN secure gateways), while the user plane may be directly routed or routed with IPUPS functionality for additional security. Figure 6 shows method analogous to the above-mentioned user equipment-network case when both ends (i.e. both networks 100, 200) support a given user plane mode of operation, resulting, e.g., in an end-to-end segment routing-based user plane. However, also in case of inter-network connectivity, there is a need to support the case when one network, especially the interconnection between the two networks, does not support a given type of user plane; for this case Figure 7 shows a network 100 using a given user plane mode of operation (e.g. SRv6) that needs to bridge (or translate) between SRv6 and GTP-U.

In Figure 6, a communication diagram between the access network 110 and network nodes or elements of the telecommunications network 100 as well as of the further telecommunications network 200 is schematically and exemplarily shown, representing an example according to the present invention how the second user plane mode of operation is susceptible to be used between the telecommunications network 100 and the further telecommunications network 200. Figure 6 explicitly shows the session management function 122, the user plane function 123, and the secure edge protection proxy (function) 124 of the telecommunications network 100 (i.e. the visited session management function 122, the visited user plane function 123 and the visited secure edge protection proxy (function) 124, the visited user plane function 123 especially also comprising or referring to the (visited) inter PLMN user plane security (IPUPS) functionality of the telecommunications network 100). Furthermore, Figure 6 explicitly shows the further session management function 222 of the further telecommunications network 200, the further user plane function 223 of the further telecommunications network 200, and the further secure edge protection proxy (function) 224 of the further telecommunications network 200 (i.e. the home session management function 222, the home user plane function 223 and the home secure edge protection proxy (function) 224, the home user plane function 223 especially also comprising or referring to the (visited) inter PLMN user plane security (IPUPS) functionality of the further telecommunications network 200).

In a first processing step 531, the visited session management function 122 requests to the home session management function 221 (via the secure edge protection proxies 124, 224, thereby realizing, in a second processing step 532, an N32-based control plane exchange) to set up N9 connectivity (i.e. connectivity of or according to the N9 interface or reference point), the indication to use (or the indication that there is a capability to use) the second user plane mode of operation (i.e. segment routing-based) for user plane traffic as well as the corresponding segment routing header information (to be used by the home network 200, especially by the home user plane function 223), i.e. the indication that it supports the second user plane mode of operation (or even that it supports both the first and second user plane mode of operation, i.e. especially both a segment routing-based and a GTP-U based user plane mode of operation). In a third processing step 533, the home session management function 222 transmits, to the visited session management function 122 (again via the secure edge protection proxies 224, 124, thereby realizing, again, an N32-based control plane exchange) an accept message, especially comprising the indication of accepting the use of the second user plane mode of operation (i.e. segment routing-based) for user plane traffic as well as the corresponding segment routing header information (to be used by the visited network 100, especially by the visited user plane function 123). In a fourth processing step 534, the visited session management function 122 sets up segment routing-based user plane functionality (by means of setting up - in the visited user plane function/IPUPS 123 - the processing of the segment routing header information received from the home session management function 223), and in a fifth processing step 535, the home session management function 222 sets up segment routing-based user plane functionality (by means of setting up - in the home user plane function/IPUPS 223 - the processing of the segment routing header information received from the visited session management function 123). As a result thereof, in a sixth and seventh processing step 536, 537, the segment routing-based user plane communication (i.e. the second user plane mode of operation) is established, on the one hand between the access network 110 of the telecommunications network 100 towards the visited user plane function/IPUPS 123 (sixth processing step 536) as a segment routing-based N3 interface (or reference point), and on the other hand between the visited user plane function/IPUPS 123 and the home user plane function/IPUPS 223 (seventh processing step 537) as a segment routing-based N9 interface.

In contrast, in Figure 7, a communication diagram between, again, the access network 110 and network nodes or elements of the telecommunications network 100 as well as of the further telecommunications network 200 is schematically and exemplarily shown, representing an example according to the present invention how the first user plane mode of operation is susceptible to be used between the telecommunications network 100 and the further telecommunications network 200. Again, Figure 7 explicitly shows the session management function 122, the user plane function 123, and the secure edge protection proxy (function) 124 of both the telecommunications network 100 and the further telecommunications network 200, the respective user plane functions 123, 223 again especially also comprising or referring to the (visited/home) inter PLMN user plane security (IPUPS) functionality of the respective telecommunications networks 100, 200.

In a first processing step 541, the visited session management function 122 requests to the home session management function 221 (via the secure edge protection proxies 124, 224, thereby realizing, in a second processing step 542, an N32-based control plane exchange) to set up N9 connectivity, the indication to use (or the indication that there is a capability to use) the second user plane mode of operation (i.e. segment routing-based) for user plane traffic as well as the corresponding segment routing header information (to be used by the home network 200, especially by the home user plane function 223), i.e. the indication that it supports the second user plane mode of operation (or even that it supports both the first and second user plane mode of operation, i.e. especially both a segment routing-based and a GTP-U based user plane mode of operation). In a third processing step 543, the home session management function 222 transmits, to the visited session management function 122 (again via the secure edge protection proxies 224, 124, thereby realizing, again, an N32-based control plane exchange) a message indicating that segment routing-based user plane communication (second user plane mode of operation) is not supported and that a legacy user plane communication (first user plane mode of operation) shall be used. This results, in a fourth processing step 544, the visited session management function 122 setting up processing to convert or translate segment routing-based user plane processing or functionality to GTP-U-based user plane processing or functionality in the visited user plane function/IPUPS 123, and in a fifth processing step 545, the home session management function 222 sets up legacy user plane processing in the home user plane function/IPUPS 223. As a result thereof, in a sixth and seventh processing step 546, 547, the segment routing-based user plane communication (i.e. the second user plane mode of operation) is established between the access network 110 of the telecommunications network 100 towards the visited user plane function/IPUPS 123 (sixth processing step 546) as a segment routing-based N3 interface (or reference point), and the legacy GTP-U-based user plane processing is established between the visited user plane function/IPUPS 123 and the home user plane function/IPUPS 223 (seventh processing step 547) as a GTP-U-based N9 interface.

In case that, the visited session management function 122 had, in the first processing step 541, indicated that it supports only (or is only capable of) the first user plane mode of operation (i.e. especially a GTP-U based user plane mode of operation) or that it requests the first user plane mode of operation to be used (regarding the specific packet data unit session considered or requested), the response, in the third processing step 543, from home session management function 222 would have been either identical (or perhaps with the indication that segment routing-based user plane processing would be possible), and the fourth, fifth, sixth and seventh processing steps 544, 545, 546, 547 would have been conducted as described above.

Again, it is possible, according to the present invention, that regarding different packet data unit sessions different user plane modes of operation are used between the telecommunications network 100 and the further telecommunications network 200.

As has been mentioned, the present invention comprises - besides transmitting capability information, e.g. the capability information 320 of the user equipment 20 or the further capability information or the network capability information - also transmitting segment routing header information (in case that segment routing-based user plane functionality is to be used). In this sense, the method relates to the telecommunications network 100 (or the further telecommunications network 200) (either the access network 110 or the core network 120, 220) to signal the user equipment 20 segment routing-related functionality so that the user equipment 20 is able to:
-- to uplink packets: Add segment routing headers (or segment routing header information) to uplink traffic according to a logic signaled by the network,
-- to downlink packets: Remove segment routing headers (or segment routing header information) form downlink traffic,
-- to either uplink or downlink:
   -- apply packet processing logic to matching traffic to packets with a given segment routing header (information
   -- map between packet data unit session, quality-of-service flow/subflow, application traffic and one or more segment routing headers.

The transmission of (or the possibilities to transmit) segment routing-related information - especially segment routing header information - is schematically shown in Figure 3 which schematically (and in a simplified manner) illustrates different interfaces or reference points, between different parts of a plurality of telecommunications networks, where segment routing header information (and/or corresponding conditions or condition information) is susceptible to be transmitted according to the present invention in order to define how the second user plane mode of operation is to be implemented. Specifically, Figure 3 shows the user equipment 20, the access network 110 (especially of the telecommunications network 100 acting as visited network), the core network 120 (especially of the telecommunications network 100 acting as visited network), and the further core network 220 (especially of the further telecommunications network 200 acting as home network of the user equipment 20). Reference sign A designates the transmission of segment routing header information (and/or corresponding conditions or condition information) from the access network 110 to the user equipment 20. Reference sign B designates the transmission of segment routing header information (and/or corresponding conditions or condition information) from the core network 120 to the user equipment 20. Reference sign C designates the transmission of segment routing header information (and/or corresponding conditions or condition information) from the further core network 210 to the user equipment 20. The user equipment 20 evaluates the conditions and applies the segment routing header (information) based on the communicated conditions, i.e. for the uplink direction, the network 100, 200 instructs the user equipment 20 to add specific segment routing header(s) (segment routing header information) and to apply packet processing logic, to specific traffic and when given conditions such as time, location and/or network conditions are met.

This is schematically shown in Figure 9, schematically illustrating a communication diagram between the user equipment 20, the telecommunications network 100, and (exemplarily) a data network 101, showing how the second user plane mode of operation (i.e. segment routing) is susceptible to be implemented regarding uplink traffic from the user equipment 20 towards the telecommunications network 100: In a first processing step 551, information is transmitted, by the telecommunications network 100, to the user equipment 20, indicating the segment routing header information to add to uplink (user plane) traffic (i.e. user plane traffic to be sent, by the user equipment 20, towards the network 100, i.e. in uplink direction). The term segment routing header information is used to indicate the segment routing header information per se (or: as such) as well as, if applicable, mapping information and, as well if applicable, information related to conditions to respect. In a second processing step 552, matching traffic is generated by the user equipment 20, e.g. by an application running on the user equipment 20 hardware/operating system. In a third processing step 553, and in case that the conditions - indicated as part of the segment routing header information received by the user equipment 20 - are met, segment routing header information (i.e. one or a plurality of segment routing header(s)) is added to (user plane) data packets or (user plane) payload so that the data packets can be further transmitted and/or processed accordingly. In a fourth processing step 554, the data packets - i.e. including the segment routing header(s) - are sent (by the user equipment 20) towards the telecommunications network 100 (i.e. to the respective access network or core network node or element), and, in a fifth processing step 555, the traffic is processed (by the telecommunications network 100) as per the segment routing header(s), and, eventually, in a sixth processing step 556, sent (in the exemplary situation shown in Figure 9) to the data network 101.

Regarding the opposite direction, i.e. (user plane) traffic towards the user equipment 20, Figure 10 schematically illustrates a communication diagram between the user equipment 20, the telecommunications network 100, and (exemplarily) a data network 101, showing how the second user plane mode of operation (i.e. segment routing) is susceptible to be implemented regarding downlink traffic from the telecommunications network 100 towards the user equipment 20:
In a first processing step 561, information is transmitted, by the telecommunications network 100, to the user equipment 20, indicating the segment routing header information to remove from downlink (user plane) traffic (i.e. user plane traffic to be sent, by the telecommunications network 100, towards the user equipment 20, i.e. in downlink direction). The term segment routing header information, again, is used to indicate the segment routing header information per se (or: as such) as well as, if applicable, mapping information and, as well if applicable, information related to conditions to respect. In a second processing step 562, the telecommunications network 100 receives data packets or traffic, in downlink direction from (exemplarily) the data network 101, the telecommunications network 100 furthermore adds, in a third processing step 563, segment routing header information to (user plane) the data packets/traffic or payload, and, in a fourth processing step 564, sends the data packets or traffic - i.e. including the segment routing header(s) - to the user equipment 20. In case that the conditions (being explicitly or implicitly) indicated are met, the user equipment 20 removes the segment routing header(s) from the respective data packets, and applies the respective data processing. Finally, in a sixth processing step 556, the data packets (or the payload) is forwarded to the respective application of the user equipment 20. Hence, in summary, the user equipment 20 receives the user plane traffic containing the segment routing header(s) or segment routing header information, and the telecommunications network 100 instructs the user equipment 20 to remove specific segment routing header(s) (segment routing header information) and to apply packet processing logic, to specific traffic and when given conditions such as time, location and/or network conditions are met.

In terms of mapping, i.e. the establishment of a relationship between two elements, such as where to apply segment routing headers and/or what actions given segment routing headers trigger, which occurs for both uplink and downlink directions, the following mappings are considered to be signaled from the telecommunications network 100 to the user equipment 20:
-- traffic mapping (used in the downlink direction), between:
   -- a specific traffic by means of an application identifier, packet data unit session identifier, packet data unit session type (e.g. IP, Ethernet), quality-of-service flow ID, IP tuple (e.g. source IP, destination IP), slice identifier, data network name (DNN), fully qualified domain name (FQDN) to
   -- a specific segment routing header
-- segment routing header mapping (used in the uplink or downlink directions), between
   -- a specific segment routing header
   -- a specific action for packet processing, such as: drop packet; apply buffering; forward via specific packet data unit session, slice, DNN, network interface, forward towards specific application; apply quality-of-service (e.g. traffic shaping).

By signaling appropriate segment routing header and mapping information to the user equipment 20, the following use cases can be realized:
-- based on segment routing header information, ascertain to what PDU session, quality-of-service (sub-)flow a data packet belongs to
-- identify traffic belonging to specific DNN and/or S-NSSA (slice) based on segment routing header information
-- instruct the UE to perform user plane logic for uplink/downlink traffic for specific traffic based on segment routing header information
-- it is possible to provide segment routing header processing independently at the core network and (radio) access network layers, e.g. to use certain headers at the RAN layer while the core network uses other headers. The access network can thus process (and pop/remove) access network-related headers and keep core network-related headers (i.e. access network headers are transparent, even unknown, to the core network)

With regard to the question how to deliver the mapping information to the user equipment 20, several methods are considered. In terms of network functionality, and based on current protocol layers available for telecom networks, it is advantageous if current architectures are compatible with the use of segment routing header. The following delivery methods are possible and preferred according to the present invention:
-- The access network can deliver segment routing-related information via access stratum, radio resource control (RRC) protocol layers, even via system information block (SIB) protocol layers.

The core network can use non-access stratum (NAS) protocol, especially in the form of protocol containers within the non-access stratum protocol, especially the session management container (between the user equipment 20 and session management function 122), as exemplary shown in Figure 8, which schematically illustrates different possibilities how the segment routing header information - or mapping information - is susceptible to be transmitted between different network elements or components, and especially towards the user equipment 20. On the left hand side, Figure 8 shows one alternative for transmitting such segment routing header information - or mapping information - towards the user equipment 20, namely using the session management function 122 (and via the packet data unit establishment procedure), wherein, in a first processing step 501, the packet data unit session establishment is requested (by means of a corresponding requesting message, sent by the user equipment 20 to the session management function 122), and, in the second processing step 502, the packet data unit session establishment accept message is sent, by the session management function 122 to the user equipment 20, the packet data unit session establishment accept message comprising the segment routing parameters and/or mapping information (i.e. the segment routing header information).

As an alternative delivery method albeit only applicable to uplink traffic, Figure 8 shows, on its right hand side, a communication diagram between the user equipment 20 and a policy and charging function 125 of the telecommunications network 100, wherein the transmission of the corresponding information involves the policy and charging function 125 and is part of a user equipment route selection policy (URSP) rule transmission, i.e. via the policy container part in non-access stratum signaling, i.e. in the signaling between user equipment 20 and the policy and charging function 125, in a first processing step 503, the user equipment 20 policy association between the user equipment 20 and the policy and charging function 125 occurs or takes place, and, in a second processing step 504, the segment routing parameters (or the segment routing header information) is included in user equipment route selection policy rules sent to the user equipment 20.

Furthermore according to the present invention, multi-network routing is preferably enabled: In order to better support the indication of the target for some considered data packets in transit through the visited telecommunications network (i.e. telecommunications network 100 or V-PLMN), it is preferred that the H-PLMN (or further telecommunications network 200) signals the user equipment 20 to include segment routing header information indicating the target network identifier (e.g. containing the PLMN ID of the home network 200) so that the V-PLMN (or telecommunications network 100) can easily route said data packets towards the home network 200.

Thus, the present invention focuses on the following aspects:
-- enable support of SRv6-based user plane while providing backwards compatibility, i.e. still allowing legacy-based user plane transport using the protocol stack in conventionally known telecommunications networks,
-- enable the user equipment 20 to perform user plane manipulation, based on geographical location, time constraints and what network the user equipment 20 is connected to,
-- consider a multi-network deployment, especially the case of roaming and that of multiple networks (e.g. network federation),
-- as a consequence, a simpler implementation of the core network and of the access network is possible, as well as a reduction of the number of protocols that need to be encapsulated or decapsulated while a data packet travels between user equipment 20 and the data network 101.

## Claims

1. Method for using a user equipment (20) with at least one telecommunications network (100), wherein the user equipment (20) is connected to the telecommunications network (100) using an access network (110) of or assigned to or associated with the telecommunications network (100) and the telecommunications network (100) further comprising a core network (120) to which the user equipment (20) is connected,
wherein the user equipment (20) is used with the telecommunications network (100) by means of transmitting and/or receiving user plane data and control plane data, wherein, regarding user plane data exchanged between the user equipment (20) and the telecommunications network (100), at least either a first user plane mode of operation or a second user plane mode of operation is able to be used for a given access technology, wherein the second user plane mode of operation is a segment-routing-related second user plane mode of operation,
wherein the method comprises the following steps:
-- in a first step, the user equipment (20) transmits a capability information (320) to the telecommunications network (100), the capability information (320) being related to a capability of the user equipment (20) to apply or to use the first user plane mode of operation and/or the second user plane mode of operation,
-- in a second step, the first user plane mode of operation or the second user plane mode of operation is applied in accordance with the capability information (320),
wherein in case that the second user plane mode of operation is used, at least one out of the following applies:
-- the telecommunications network (100) signals to the user equipment (20) a segment routing-related functionality,
-- the user equipment (20) adds segment routing header information to uplink traffic,
-- the user equipment (20) removes segment routing header information from downlink traffic,
-- the user equipment (20) applies, to either uplink or downlink traffic, packet processing logic to matching traffic,
-- the user equipment (20) applies a mapping between packet data unit sessions, quality-of-service flows or quality-of-service subflows and/or application traffic and one or more pieces of segment routing header information.

2. Method according to claim 1, wherein the user equipment (20) is either capable of applying or using:
-- the first user plane mode of operation only, or
-- the first user plane mode of operation, or, alternatively, the second user plane mode of operation, or
-- the second user plane mode of operation only,
which is indicated by means of the capability information (320), wherein especially the capability information (320) additionally indicates:
-- a preferred user plane mode of operation out of the first and second user plane modes of operation,
-- conditional application and/or preference of a given user plane mode of operation, especially the applicability to a given slice, time and/or location,
-- conditional application and/or preference of a given user plane mode of operation for a given application or service, especially the applicability to a data network, a local, home and/or roaming service, and/or
-- conditional application and/or preference of a given user plane mode of operation for a given type of traffic, especially internet protocol and ethernet traffic.

3. Method according to one of the preceding claims, wherein the first user plane mode of operation corresponds to, or relies on radio link control, RLC, packet data convergence protocol, PDCP, or using the service data adaptation protocol, SDAP, or a variant thereof.

4. Method according to one of the preceding claims, wherein the user plane protocol between the access network (110), especially a gNB, and the core network (120), especially a user plane function, UPF, is chosen based on the applied user plane mode of operation used between the user equipment (20) and the access network (110), especially when the first user plane mode of operation is associated to the GPRS tunneling protocol, GTP.

5. Method according to one of the preceding claims, wherein, besides the user equipment (20), a further user equipment is connected to the telecommunications network (100) and wherein the further user equipment transmits a further capability information to the telecommunications network (100), the further capability information being related to a further capability of the further user equipment to apply or to use the first user plane mode of operation and/or the second user plane mode of operation, wherein, especially in case that the capability information (320) and the further capability information differ, the first user plane mode of operation is applied in accordance with the capability information (320), and the second user plane mode of operation is applied in accordance with the further capability information, or vice versa, between the user equipments and the telecommunications network (100).

6. Method according to one of the preceding claims, wherein the capability information (320) is transmitted, by the user equipment (20) to the telecommunications network (100), by means of, or upon, at least one out of the following:
-- the user equipment (20) registering at or with the telecommunications network (100), especially as part of connection capabilities,
-- a packet data unit session, PDU session, establishment request of the user equipment (20),
-- a radio resource management, RRM, message,
-- a non-access stratum, NAS, message,
wherein especially - especially subsequent to the transmission, by the user equipment (20), of the capability information (320) to the telecommunications network (100) - the telecommunications network (100) transmits an indication regarding the user plane mode of operation to be used or to be applied by the user equipment,
wherein especially the indication which user plane mode of operation to use is transmitted, to the user equipment (20), by means of or as part of a packet data unit session establishment accept message, a user equipment registration accept message, a radio resource management, RRM, message or a non-access stratum, NAS, message.

7. Method according to one of the preceding claims, wherein a further telecommunications network (200), connected to the telecommunications network (100) is serving the user equipment (20), especially as a home network, wherein, regarding user plane data exchanged between the telecommunications network (100) and the further telecommunications network (200), at least either the first user plane mode of operation or the second user plane mode of operation is able to be used for a given access technology,
wherein either
-- the further telecommunications network (200) transmits a network capability information to the telecommunications network (100), the network capability information being related to a capability of the further telecommunications network (200) to apply or to use the first user plane mode of operation and/or the second user plane mode of operation, this resulting in either the first user plane mode of operation or the second user plane mode of operation being applied in accordance with the network capability information between the telecommunications network (100) and the further telecommunications network (200), or
-- the telecommunications network (100) transmits a network capability information to the further telecommunications network (200), the network capability information being related to a capability of the telecommunications network (100) to apply or to use the first user plane mode of operation and/or the second user plane mode of operation, this resulting in either the first user plane mode of operation or the second user plane mode of operation being applied in accordance with the network capability information between the telecommunications network (100) and the further telecommunications network (200), or
-- the telecommunications network (100) transmits a network capability information to the further telecommunications network (200), the network capability information being related to a capability of the telecommunications network (100) to apply or to use the first user plane mode of operation and/or the second user plane mode of operation, this resulting in either the first user plane mode of operation or the second user plane mode of operation being applied in accordance with the network capability information between the telecommunications network (100) and the further telecommunications network (200).

8. Method according to one of the preceding claims, wherein a further telecommunications network (200), connected to the telecommunications network (100) is serving the user equipment (20), especially as a home network, wherein, regarding user plane data exchanged between the user equipment (20) and the further telecommunications network (200), at least either the first user plane mode of operation or the second user plane mode of operation is able to be used for a given access technology,
wherein the user equipment (20) transmits the capability information (320) also to the further telecommunications network (200), the capability information (320) being related to the capability of the user equipment (20) to apply or to use the first user plane mode of operation and/or the second user plane mode of operation, this resulting in either the first user plane mode of operation or the second user plane mode of operation being applied in accordance with the capability information (320) between the user equipment (20) and the further telecommunications network (200).

9. Method according to one of the preceding claims, wherein
-- the user equipment (20) adds segment routing header information to uplink traffic according to a logic signaled by the telecommunications network (100), wherein especially a specific segment routing header information is added and/or a data packet processing logic applied to specific traffic in case of a given time and/or a given location and/or given network conditions being met, and/or
-- the user equipment (20) removes specific segment routing header information and applies data packet processing logic, especially for specific traffic in case of a given time and/or a given location and/or given network conditions being met.

10. User equipment (20) for being operated with at least one telecommunications network (100), wherein the user equipment (20) is connected to the telecommunications network (100) using an access network (110) of or assigned to or associated with the telecommunications network (100) and the telecommunications network (100) further comprising a core network (120) to which the user equipment (20) is connected,
wherein the user equipment (20) is used with the telecommunications network (100) by means of transmitting and/or receiving user plane data and control plane data, wherein, regarding user plane data exchanged between the user equipment (20) and the telecommunications network (100), at least either a first user plane mode of operation or a second user plane mode of operation is able to be used for a given access technology, wherein the second user plane mode of operation is a segment-routing-related second user plane mode of operation,
wherein the user equipment (20) is configured such that:
-- the user equipment (20) transmits a capability information (320) to the telecommunications network (100), the capability information (320) being related to a capability of the user equipment (20) to apply or to use the first user plane mode of operation and/or the second user plane mode of operation,
-- the first user plane mode of operation or the second user plane mode of operation is applied in accordance with the capability information (320), wherein in case that the second user plane mode of operation is used, at least one out of the following applies:
-- the user equipment (20) is configured to be signaled a segment routing-related functionality from the telecommunications network (100),
-- the user equipment (20) is configured to add segment routing header information to uplink traffic,
-- the user equipment (20) is configured to remove segment routing header information from downlink traffic,
-- the user equipment (20) is configured to apply, to either uplink or downlink traffic, packet processing logic to matching traffic,
-- the user equipment (20) is configured to apply a mapping between packet data unit sessions, quality-of-service flows or quality-of-service subflows and/or application traffic and one or more pieces of segment routing header information.

11. System or telecommunications network (100) for using a user equipment (20) with the telecommunications network (100), wherein the user equipment (20) is connected to the telecommunications network (100) using an access network (110) of or assigned to or associated with the telecommunications network (100) and the telecommunications network (100) further comprising a core network (120) to which the user equipment (20) is connected,
wherein the user equipment (20) is used with the telecommunications network (100) by means of transmitting and/or receiving user plane data and control plane data, wherein, regarding user plane data exchanged between the user equipment (20) and the telecommunications network (100), at least either a first user plane mode of operation or a second user plane mode of operation is able to be used for a given access technology, wherein the second user plane mode of operation is a segment-routing-related second user plane mode of operation,
wherein the system or telecommunications network (100) is configured such that:
-- the user equipment (20) transmits a capability information (320) to the telecommunications network (100), the capability information (320) being related to a capability of the user equipment (20) to apply or to use the first user plane mode of operation and/or the second user plane mode of operation,
-- the first user plane mode of operation or the second user plane mode of operation is applied in accordance with the capability information (320), wherein in case that the second user plane mode of operation is used, the telecommunications network (100) is configured to signal to the user equipment (20) a segment routing-related functionality.

12. Program comprising a computer readable program code which, when executed on a computer and/or on a user equipment (20) and/or on a network node of a telecommunications network (100), especially a control plane function and/or user plane function, or in part on the user equipment (20) and/or in part on the network node of a telecommunications network (100), especially the control plane function and/or user plane function, causes the computer and/or the user equipment (20) and/or the network node of the telecommunications network (100) to perform a method according one of claims 1 to 9.

13. Computer-readable medium comprising instructions which when executed on a computer and/or on a user equipment (20) and/or on a network node of a telecommunications network (100), especially a control plane function and/or user plane function, or in part on the user equipment (20) and/or in part on the network node of a telecommunications network (100), especially the control plane function and/or user plane function, causes the computer and/or the user equipment (20) and/or the network node of the telecommunications network (100) to perform a method according one of claims 1 to 9.

## Patentansprüche

1. Verfahren zum Verwenden einer Benutzerausrüstung (20) mit mindestens einem Telekommunikationsnetz (100), wobei die Benutzerausrüstung (20) mit dem Telekommunikationsnetz (100) unter Verwendung eines Zugangsnetzes (110) verbunden wird, das Teil des Telekommunikationsnetzes (100) ist oder dem Telekommunikationsnetz (100) zugewiesen oder mit dem Telekommunikationsnetz (100) verknüpft ist, und das Telekommunikationsnetz (100) des Weiteren ein Kernnetz (120) umfasst, mit dem die Benutzerausrüstung (20) verbunden wird,
wobei die Benutzerausrüstung (20) mit dem Telekommunikationsnetz (100) mittels des Sendens und/oder Empfangens von Benutzerebenendaten und Steuerungsebenendaten verwendet wird, wobei bezüglich Benutzerebenendaten, die zwischen der Benutzerausrüstung (20) und dem Telekommunikationsnetz (100) ausgetauscht werden, mindestens entweder ein erster Benutzerebenen-Betriebsmodus oder ein zweiter Benutzerebenen-Betriebsmodus für eine gegebene Zugangstechnologie verwendbar ist, wobei der zweite Benutzerebenen-Betriebsmodus ein segmentroutungsbezogener zweiter Benutzerebenen-Betriebsmodus ist,
wobei das Verfahren die folgenden Schritte umfasst:
- in einem ersten Schritt sendet die Benutzerausrüstung (20) eine Fähigkeitsinformation (320) an das Telekommunikationsnetz (100), wobei sich die Fähigkeitsinformation (320) auf eine Fähigkeit der Benutzerausrüstung (20) bezieht, den ersten Benutzerebenen-Betriebsmodus und/oder den zweiten Benutzerebenen-Betriebsmodus anzuwenden oder zu verwenden,
- in einem zweiten Schritt wird der erste Benutzerebenen-Betriebsmodus oder der zweite Benutzerebenen-Betriebsmodus gemäß der Fähigkeitsinformation (320) angewendet,
wobei in dem Fall, dass der zweite Benutzerebenen-Betriebsmodus verwendet wird, mindestens eines von Folgendem gilt:
- das Telekommunikationsnetz (100) signalisiert der Benutzerausrüstung (20) eine segmentroutungsbezogene Funktionalität,
- die Benutzerausrüstung (20) fügt dem Uplink-Verkehr Segmentroutungs-Header-Information hinzu,
- die Benutzerausrüstung (20) entfernt die Segmentroutungs-Header-Information aus dem Downlink-Verkehr,
- die Benutzerausrüstung (20) wendet entweder bei Uplink- oder Downlink-Verkehr eine Paketverarbeitungslogik auf übereinstimmenden Verkehr an,
- die Benutzerausrüstung (20) wendet ein Mapping zwischen Paketdateneinheit-Sitzungen, Dienstgüte-Flüssen oder Dienstgüte-Teilflüssen und/oder Anwendungsverkehr und einer oder mehreren Segmentroutungs-Header-Informationen an.

2. Verfahren nach Anspruch 1, wobei die Benutzerausrüstung (20) in der Lage ist, entweder anzuwenden oder zu verwenden:
- nur den ersten Benutzerebenen-Betriebsmodus oder
- den ersten Benutzerebenen-Betriebsmodus oder alternativ die zweiten Benutzerebenen-Betriebsmodus oder
- nur die zweiten Benutzerebenen-Betriebsmodus,
was mittels der Fähigkeitsinformation (320) angezeigt wird, wobei insbesondere die Fähigkeitsinformation (320) zusätzlich angibt:
- einen bevorzugten Benutzerebenen-Betriebsmodus aus dem ersten und dem zweiten Benutzerebenen-Betriebsmodus,
- bedingte Anwendung und/oder Bevorzugung eines gegebenen Benutzerebenen-Betriebsmodus, insbesondere die Anwendbarkeit auf eine gegebene Slice, eine gegebene Zeit und/oder einen gegebene Ort,
- bedingte Anwendung und/oder Bevorzugung eines gegebenen Benutzerebenen-Betriebsmodus für eine gegebene Anwendung oder einen gegebenen Dienst, insbesondere die Anwendbarkeit auf ein Datennetz, einen Orts-, Heim- und/oder Roaming-Dienst, und/oder
- bedingte Anwendung und/oder Bevorzugung eines gegebenen Benutzerebenen-Betriebsmodus für eine gegebene Art von Verkehr, insbesondere Internet-Protokoll- und Ethernet-Verkehr.

3. Verfahren nach einem der vorangehenden Ansprüche, wobei der erste Benutzerebenen-Betriebsmodus dem Radio Link Control (RLC)-Packet Data Convergence Protocol (PDCP) oder der Verwendung des Service Data Adaptation Protocol (SDAP) oder einer Variante davon entspricht oder darauf beruht.

4. Verfahren nach einem der vorangehenden Ansprüche, wobei das Benutzerebenenprotokoll zwischen dem Zugangsnetz (110), insbesondere einem gNB, und dem Kernnetz (120), insbesondere eine Benutzerebenenfunktion (User Plane Function, UPF), auf der Grundlage des angewendeten Benutzerebenen-Betriebsmodus gewählt wird, der zwischen der Benutzerausrüstung (20) und dem Zugangsnetz (110) verwendet wird, insbesondere, wenn der erste Benutzerebenen-Betriebsmodus mit dem GPRS-Tunneling-Protokoll (GTP) verknüpft ist.

5. Verfahren nach einem der vorangehenden Ansprüche, wobei neben der Benutzerausrüstung (20) eine weitere Benutzerausrüstung mit dem Telekommunikationsnetz (100) verbunden wird und wobei die weitere Benutzerausrüstung eine weitere Fähigkeitsinformation an das Telekommunikationsnetz (100) sendet, wobei sich die weitere Fähigkeitsinformation auf eine weitere Fähigkeit der weiteren Benutzerausrüstung bezieht, den ersten Benutzerebenen-Betriebsmodus und/oder den zweiten Benutzerebenen-Betriebsmodus anzuwenden oder zu verwenden, wobei, insbesondere in dem Fall, dass sich die Fähigkeitsinformation (320) und die weitere Fähigkeitsinformation unterscheiden, der erste Benutzerebenen-Betriebsmodus gemäß der Fähigkeitsinformation (320) zwischen den Benutzerausrüstungen und dem Telekommunikationsnetz (100) angewendet wird und der zweite Benutzerebenen-Betriebsmodus gemäß der weiteren Fähigkeitsinformation zwischen den Benutzerausrüstungen und dem Telekommunikationsnetz (100) angewendet wird, oder umgekehrt.

6. Verfahren nach einem der vorangehenden Ansprüche, wobei die Fähigkeitsinformation (320) durch die Benutzereinrichtung (20) an das Telekommunikationsnetz (100) mittels, oder bei, mindestens einem von Folgendem gesendet wird:
- die Benutzerausrüstung (20) registriert sich in oder bei dem Telekommunikationsnetz (100), insbesondere als Teil der Verbindungsfähigkeiten,
- einer Paketdateneinheit (Packet Data Unit, PDU)-Sitzungs-Aufbauanforderung der Benutzerausrüstung (20),
- eine Funkressourcenmanagement (Radio Resource Management, RRM)-Nachricht,
- einer Nichtzugangsschicht (Non-Access Stratum, NAS)-Nachricht,
wobei insbesondere - insbesondere im Anschluss an das Senden, durch die Benutzerausrüstung (20), der Fähigkeitsinformation (320) an das Telekommunikationsnetz (100) - das Telekommunikationsnetz (100) eine Angabe bezüglich des Benutzerebenen-Betriebsmodus sendet, der durch die Benutzerausrüstung zu verwenden oder anzuwenden ist,
wobei insbesondere die Angabe, welcher Benutzerebenen-Betriebsmodus zu verwenden ist, an die Benutzerausrüstung (20) mittels oder als Teil einer Paketdateneinheit-Sitzungsaufbau-Akzeptanznachricht, einer Benutzerausrüstungsregistrierungs-Akzeptanznachricht,
einer Funkressourcenmanagement (RRM)-Nachricht oder einer Nicht-Zugangsschicht (NAS)-Nachricht gesendet wird.

7. Verfahren nach einem der vorangehenden Ansprüche, wobei ein mit dem Telekommunikationsnetz (100) verbundenes weiteres Telekommunikationsnetz (200) die Benutzerausrüstung (20), insbesondere als ein Heimnetz, bedient, wobei bezüglich der zwischen dem Telekommunikationsnetz (100) und dem weiteren Telekommunikationsnetz (200) ausgetauschten Benutzerebenendaten mindestens entweder der erste Benutzerebenen-Betriebsmodus oder der zweite Benutzerebenen-Betriebsmodus für eine gegebene Zugangstechnologie verwendbar ist,
wobei entweder
- das weitere Telekommunikationsnetz (200) eine Netzfähigkeitsinformation an das Telekommunikationsnetz (100) sendet, wobei sich die Netzfähigkeitsinformation auf eine Fähigkeit des weiteren Telekommunikationsnetzes (200) bezieht, den ersten Benutzerebenen-Betriebsmodus und/oder den zweiten Benutzerebenen-Betriebsmodus anzuwenden oder zu verwenden, was dazu führt, dass entweder der erste Benutzerebenen-Betriebsmodus oder der zweite Benutzerebenen-Betriebsmodus gemäß der Netzfähigkeitsinformation zwischen dem Telekommunikationsnetz (100) und dem weiteren Telekommunikationsnetz (200) angewendet wird, oder
- das Telekommunikationsnetz (100) eine Netzfähigkeitsinformation an das weitere Telekommunikationsnetz (200) sendet, wobei sich die Netzfähigkeitsinformation auf eine Fähigkeit des Telekommunikationsnetzes (100) bezieht, den ersten Benutzerebenen-Betriebsmodus und/oder den zweiten Benutzerebenen-Betriebsmodus anzuwenden oder zu verwenden, was dazu führt, dass entweder der erste Benutzerebenen-Betriebsmodus oder der zweite Benutzerebenen-Betriebsmodus gemäß der Netzfähigkeitsinformation zwischen dem Telekommunikationsnetz (100) und dem weiteren Telekommunikationsnetz (200) angewendet wird, oder
- das Telekommunikationsnetz (100) eine Netzfähigkeitsinformation an das weitere Telekommunikationsnetz (200) sendet, wobei sich die Netzfähigkeitsinformation auf eine Fähigkeit des Telekommunikationsnetzes (100) bezieht, den ersten Benutzerebenen-Betriebsmodus und/oder den zweiten Benutzerebenen-Betriebsmodus anzuwenden oder zu verwenden, was dazu führt, dass entweder der erste Benutzerebenen-Betriebsmodus oder der zweite Benutzerebenen-Betriebsmodus gemäß der Netzfähigkeitsinformation zwischen dem Telekommunikationsnetz (100) und dem weiteren Telekommunikationsnetz (200) angewendet wird.

8. Verfahren nach einem der vorangehenden Ansprüche, wobei ein mit dem Telekommunikationsnetz (100) verbundenes weiteres Telekommunikationsnetz (200) die Benutzerausrüstung (20), insbesondere als ein Heimnetz, bedient, wobei bezüglich der zwischen der Benutzerausrüstung (20) und dem weiteren Telekommunikationsnetz (200) ausgetauschten Benutzerebenendaten mindestens entweder der erste Benutzerebenen-Betriebsmodus oder der zweite Benutzerebenen-Betriebsmodus für eine gegebene Zugangstechnologie verwendbar ist,
wobei die Benutzerausrüstung (20) die Fähigkeitsinformation (320) auch an das weitere Telekommunikationsnetz (200) sendet, wobei sich die Fähigkeitsinformation (320) auf die Fähigkeit der Benutzerausrüstung (20) bezieht, den ersten Benutzerebenen-Betriebsmodus und/oder den zweiten Benutzerebenen-Betriebsmodus anzuwenden oder zu verwenden, was dazu führt, dass entweder der erste Benutzerebenen-Betriebsmodus oder der zweite Benutzerebenen-Betriebsmodus gemäß der Fähigkeitsinformation (320) zwischen der Benutzerausrüstung (20) und dem weiteren Telekommunikationsnetz (200) angewendet wird.

9. Verfahren nach einem der vorangehenden Ansprüche, wobei
- die Benutzerausrüstung (20) Segmentroutungs-Header-Information zu Uplink-Verkehr gemäß einer durch das Telekommunikationsnetz (100) signalisierten Logik hinzufügt, wobei insbesondere eine spezifische Segmentroutungs-Header-Information hinzugefügt wird und/oder eine Datenpaketverarbeitungslogik auf spezifischen Verkehr angewendet wird, falls eine gegebene Zeit und/oder ein gegebener Ort und/oder gegebene Netzbedingungen erfüllt sind, und/oder
- die Benutzerausrüstung (20) spezifische Segmentroutungs-Header-Information entfernt und eine Datenpaketverarbeitungslogik, insbesondere für spezifischen Verkehr, anwendet, falls eine gegebene Zeit und/oder ein gegebener Ort und/oder gegebene Netzbedingungen erfüllt sind.

10. Benutzerausrüstung (20) zum Betreiben mit mindestens einem Telekommunikationsnetz (100), wobei die Benutzerausrüstung (20) mit dem Telekommunikationsnetz (100) unter Verwendung eines Zugangsnetzes (110) verbunden ist, das Teil des Telekommunikationsnetzes (100) ist oder dem Telekommunikationsnetz (100) zugewiesen oder mit dem Telekommunikationsnetz (100) verknüpft ist, und das Telekommunikationsnetz (100) des Weiteren ein Kernnetz (120) umfasst, mit dem die Benutzerausrüstung (20) verbunden ist,
wobei die Benutzerausrüstung (20) mit dem Telekommunikationsnetz (100) mittels des Sendens und/oder Empfangens von Benutzerebenendaten und Steuerungsebenendaten verwendet wird, wobei bezüglich Benutzerebenendaten, die zwischen der Benutzerausrüstung (20) und dem Telekommunikationsnetz (100) ausgetauscht werden, mindestens entweder ein erster Benutzerebenen-Betriebsmodus oder ein zweiter Benutzerebenen-Betriebsmodus für eine gegebene Zugangstechnologie verwendbar ist, wobei der zweite Benutzerebenen-Betriebsmodus ein segmentroutungsbezogener zweiter Benutzerebenen-Betriebsmodus ist,
wobei die Benutzerausrüstung (20) so konfiguriert ist, dass:
- die Benutzerausrüstung (20) eine Fähigkeitsinformation (320) an das Telekommunikationsnetz (100) sendet, wobei sich die Fähigkeitsinformation (320) auf eine Fähigkeit der Benutzerausrüstung (20) bezieht, den ersten Benutzerebenen-Betriebsmodus und/oder den zweiten Benutzerebenen-Betriebsmodus anzuwenden oder zu verwenden,
- der erste Benutzerebenen-Betriebsmodus oder der zweite Benutzerebenen-Betriebsmodus gemäß der Fähigkeitsinformation (320) angewendet wird, wobei in dem Fall, dass der zweite Benutzerebenen-Betriebsmodus verwendet wird, mindestens eines von Folgendem gilt:
- die Benutzerausrüstung (20) ist dazu konfiguriert, eine segmentroutungsbezogene Funktionalität von dem Telekommunikationsnetz (100) signalisiert zu bekommen,
- die Benutzerausrüstung (20) ist dazu konfiguriert, Segmentroutungs-Header-Information zu Uplink-Verkehr hinzuzufügen,
- die Benutzerausrüstung (20) ist dazu konfiguriert, Segmentroutungs-Header-Information aus Downlink-Verkehr zu entfernen,
- die Benutzerausrüstung (20) ist dazu konfiguriert, entweder bei Uplink- oder Downlink-Verkehr eine Paketverarbeitungslogik auf übereinstimmenden Verkehr anzuwenden,
- die Benutzerausrüstung (20) ist dazu konfiguriert, ein Mapping zwischen Paketdateneinheit-Sitzungen, Dienstgüte-Flüssen oder Dienstgüte-Teilflüssen und/oder Anwendungsverkehr und einer oder mehreren Segmentroutungs-Header-Informationen anzuwenden.

11. System oder Telekommunikationsnetz (100) zum Verwenden einer Benutzerausrüstung (20) mit dem Telekommunikationsnetz (100), wobei die Benutzerausrüstung (20) mit dem Telekommunikationsnetz (100) unter Verwendung eines Zugangsnetzes (110) verbunden ist, das Teil des Telekommunikationsnetzes (100) ist oder dem Telekommunikationsnetz (100) zugewiesen oder mit dem Telekommunikationsnetz (100) verknüpft ist, und das Telekommunikationsnetz (100) des Weiteren ein Kernnetz (120) umfasst, mit dem die Benutzerausrüstung (20) verbunden ist,
wobei die Benutzerausrüstung (20) mit dem Telekommunikationsnetz (100) mittels des Sendens und/oder Empfangens von Benutzerebenendaten und Steuerungsebenendaten verwendet wird, wobei bezüglich Benutzerebenendaten, die zwischen der Benutzerausrüstung (20) und dem Telekommunikationsnetz (100) ausgetauscht werden, mindestens entweder ein erster Benutzerebenen-Betriebsmodus oder ein zweiter Benutzerebenen-Betriebsmodus für eine gegebene Zugangstechnologie verwendbar ist, wobei der zweite Benutzerebenen-Betriebsmodus ein segmentroutungsbezogener zweiter Benutzerebenen-Betriebsmodus ist,
wobei das System oder Telekommunikationsnetz (100) so konfiguriert ist, dass:
- die Benutzerausrüstung (20) eine Fähigkeitsinformation (320) an das Telekommunikationsnetz (100) sendet, wobei sich die Fähigkeitsinformation (320) auf eine Fähigkeit der Benutzerausrüstung (20) bezieht, den ersten Benutzerebenen-Betriebsmodus und/oder den zweiten Benutzerebenen-Betriebsmodus anzuwenden oder zu verwenden,
- der erste Benutzerebenen-Betriebsmodus oder der zweite Benutzerebenen-Betriebsmodus gemäß der Fähigkeitsinformation (320) angewendet wird,
wobei in dem Fall, dass der zweite Benutzerebenen-Betriebsmodus verwendet wird, das Telekommunikationsnetz (100) dazu konfiguriert ist, der Benutzerausrüstung (20) eine segmentroutungsbezogene Funktionalität zu signalisieren.

12. Programm, umfassend einen computerlesbaren Programmcode, der, wenn er auf einem Computer und/oder in einer Benutzerausrüstung (20) und/oder in einem Netzknoten eines Telekommunikationsnetzes (100), insbesondere einer Steuerungsebenenfunktion und/oder einer Benutzerebenenfunktion, oder teilweise in der Benutzerausrüstung (20) und/oder teilweise in dem Netzknoten eines Telekommunikationsnetzes (100), insbesondere der Steuerungsebenenfunktion und/oder der Benutzerebenenfunktion, ausgeführt wird, den Computer und/oder die Benutzerausrüstung (20) und/oder den Netzknoten des Telekommunikationsnetzes (100) veranlasst, ein Verfahren nach einem der Ansprüche 1 bis 9 durchzuführen.

13. Computerlesbares Medium, umfassend Instruktionen, die, wenn sie auf einem Computer und/oder in einer Benutzerausrüstung (20) und/oder in einem Netzknoten eines Telekommunikationsnetzes (100), insbesondere einer Steuerungsebenenfunktion und/oder einer Benutzerebenenfunktion, oder teilweise in der Benutzerausrüstung (20) und/oder teilweise in dem Netzknoten eines Telekommunikationsnetzes (100), insbesondere der Steuerungsebenenfunktion und/oder der Benutzerebenenfunktion, ausgeführt werden, den Computer und/oder die Benutzerausrüstung (20) und/oder den Netzknoten des Telekommunikationsnetzes (100) veranlassen, ein Verfahren nach einem der Ansprüche 1 bis 9 durchzuführen.

## Revendications

1. Procédé d'utilisation d'un équipement utilisateur (20) avec au moins un réseau de télécommunications (100), dans lequel l'équipement utilisateur (20) est connecté au réseau de télécommunications (100) à l'aide d'un réseau d'accès (110) du ou affecté à ou associé au réseau de télécommunications (100) et le réseau de télécommunications (100) comprenant en outre un réseau central (120) auquel l'équipement utilisateur (20) est connecté,
dans lequel l'équipement utilisateur (20) est utilisé avec le réseau de télécommunications (100) au moyen de la transmission et/ou de la réception de données de plan utilisateur et de données de plan de commande, dans lequel, concernant des données de plan utilisateur échangées entre l'équipement utilisateur (20) et le réseau de télécommunications (100), au moins un premier mode de fonctionnement du plan utilisateur ou un second mode de fonctionnement du plan utilisateur peut être utilisé pour une technologie d'accès donnée, dans lequel le second mode de fonctionnement du plan utilisateur est un second mode de fonctionnement du plan utilisateur lié au routage par segments,
dans lequel le procédé comprend les étapes suivantes :
- dans une première étape, l'équipement utilisateur (20) transmet des informations de capacité (320) au réseau de télécommunications (100), les informations de capacité (320) étant liées à une capacité de l'équipement utilisateur (20) à appliquer ou à utiliser le premier mode de fonctionnement du plan utilisateur et/ou le second mode de fonctionnement du plan utilisateur,
- dans une seconde étape, le premier mode de fonctionnement du plan utilisateur ou le second mode de fonctionnement du plan utilisateur est appliqué conformément aux informations de capacité (320),
dans lequel, dans le cas où le second mode de fonctionnement du plan utilisateur est utilisé, au moins l'un parmi ce qui suit s'applique :
- le réseau de télécommunications (100) signale à l'équipement utilisateur (20) une fonctionnalité liée au routage par segments,
- l'équipement utilisateur (20) ajoute des informations d'en-tête de routage par segments au trafic de liaison montante,
- l'équipement utilisateur (20) supprime les informations d'en-tête de routage par segments du trafic de liaison descendante,
- l'équipement utilisateur (20) applique, au trafic de liaison montante ou de liaison descendante, une logique de traitement de paquets au trafic correspondant,
- l'équipement utilisateur (20) applique un mappage entre des sessions d'unités de données par paquets, des flux de qualité de service ou des sous-flux de qualité de service et/ou un trafic d'application et un ou plusieurs éléments d'informations d'en-tête de routage par segments.

2. Procédé selon la revendication 1, dans lequel l'équipement utilisateur (20) est soit capable d'appliquer, soit d'utiliser :
- le premier mode de fonctionnement du plan utilisateur uniquement, ou
- le premier mode de fonctionnement du plan utilisateur, ou, en variante, le second mode de fonctionnement du plan utilisateur, ou
- le second mode de fonctionnement du plan utilisateur uniquement,
qui est indiqué au moyen des informations de capacité (320), dans lequel les informations de capacité (320) indiquent en outre en particulier :
- un mode de fonctionnement du plan utilisateur préféré parmi les premier et second modes de fonctionnement du plan utilisateur,
- l'application conditionnelle et/ou la préférence d'un mode de fonctionnement du plan utilisateur donné, notamment l'applicabilité à une tranche, un moment et/ou un lieu donnés,
- l'application conditionnelle et/ou la préférence d'un mode de fonctionnement du plan utilisateur donné pour une application ou un service donné, notamment l'applicabilité à un réseau de données, à un service local, domestique et/ou d'itinérance, et/ou
- l'application conditionnelle et/ou la préférence d'un mode de fonctionnement du plan utilisateur donné pour un type de trafic donné, notamment le trafic de protocole Internet et Ethernet.

3. Procédé selon l'une des revendications précédentes, dans lequel le premier mode de fonctionnement du plan utilisateur correspond à ou repose sur le protocole de convergence de données par paquets, PDCP, de commande de liaison radio, RLC, ou utilise le protocole d'adaptation de données de service, SDAP, ou une variante de celui-ci..

4. Procédé selon l'une des revendications précédentes, dans lequel le protocole de plan utilisateur entre le réseau d'accès (110), notamment un gNB, et le réseau central (120), notamment une fonction de plan utilisateur, UPF, est choisi sur la base du mode de fonctionnement du plan utilisateur appliqué utilisé entre l'équipement utilisateur (20) et le réseau d'accès (110), notamment lorsque le premier mode de fonctionnement du plan utilisateur est associé au protocole de tunnel GPRS, GTP.

5. Procédé selon l'une des revendications précédentes, dans lequel, outre l'équipement utilisateur (20), un autre équipement utilisateur est connecté au réseau de télécommunications (100) et dans lequel l'autre équipement utilisateur transmet d'autres informations de capacité au réseau de télécommunications (100), les autres informations de capacité étant liées à une autre capacité de l'autre équipement utilisateur à appliquer ou à utiliser le premier mode de fonctionnement du plan utilisateur et/ou le second mode de fonctionnement du plan utilisateur, dans lequel, notamment dans le cas où les informations de capacité (320) et les autres informations de capacité diffèrent, le premier mode de fonctionnement du plan utilisateur est appliqué conformément aux informations de capacité (320), et le second mode de fonctionnement du plan utilisateur est appliqué conformément aux autres informations de capacité, ou vice versa, entre les équipements utilisateur et le réseau de télécommunications (100).

6. Procédé selon l'une des revendications précédentes, dans lequel les informations de capacité (320) sont transmises, par l'équipement utilisateur (20) au réseau de télécommunications (100), au moyen de, ou dans le cadre de, au moins l'un de ce qui suit :
- l'équipement utilisateur (20) s'enregistrant sur ou auprès du réseau de télécommunications (100), notamment dans le cadre de capacités de connexion,
- une demande d'établissement de session d'unité de données par paquets, session PDU, de l'équipement utilisateur (20),
- un message de gestion de ressources radio, RRM,
- un message de strate de non-accès, NAS,
dans lequel en particulier - notamment après la transmission, par l'équipement utilisateur (20), des informations de capacité (320) au réseau de télécommunications (100) - le réseau de télécommunications (100) transmet une indication concernant le mode de fonctionnement du plan utilisateur à utiliser ou à appliquer par l'équipement utilisateur,
dans lequel, en particulier, l'indication du mode de fonctionnement du plan utilisateur à utiliser est transmise à l'équipement utilisateur (20) au moyen ou dans le cadre d'un message d'acceptation d'établissement de session d'unité de données par paquets, d'un message d'acceptation d'enregistrement d'équipement utilisateur, d'un message de gestion de ressources radio, RRM, ou d'un message de strate de non-accès, NAS.

7. Procédé selon l'une des revendications précédentes, dans lequel un autre réseau de télécommunications (200), connecté au réseau de télécommunications (100), sert l'équipement utilisateur (20), notamment comme réseau domestique, dans lequel, concernant des données du plan utilisateur échangées entre le réseau de télécommunications (100) et l'autre réseau de télécommunications (200), au moins soit le premier mode de fonctionnement du plan utilisateur, soit le second mode de fonctionnement du plan utilisateur peut être utilisé pour une technologie d'accès donnée,
dans lequel soit
- l'autre réseau de télécommunications (200) transmet des informations de capacité de réseau au réseau de télécommunications (100), les informations de capacité de réseau étant liées à une capacité de l'autre réseau de télécommunications (200) à appliquer ou à utiliser le premier mode de plan utilisateur de fonctionnement et/ou le second mode de fonctionnement du plan utilisateur, ce qui entraîne l'application soit du premier mode de fonctionnement du plan utilisateur, soit du second mode de fonctionnement du plan utilisateur, conformément aux informations de capacité de réseau entre le réseau de télécommunications (100) et l'autre réseau de télécommunications (200), soit
- le réseau de télécommunications (100) transmet des informations de capacité de réseau à l'autre réseau de télécommunications (200), les informations de capacité de réseau étant liées à une capacité du réseau de télécommunications (100) à appliquer ou à utiliser le premier mode de fonctionnement du plan utilisateur et/ou le second mode de fonctionnement du plan utilisateur, ce qui entraîne l'application soit du premier mode de fonctionnement du plan utilisateur, soit du second mode de fonctionnement du plan utilisateur, conformément aux informations de capacité de réseau entre le réseau de télécommunications (100) et l'autre réseau de télécommunications (200), soit
- le réseau de télécommunications (100) transmet des informations de capacité de réseau à l'autre réseau de télécommunications (200), les informations de capacité de réseau étant liées à une capacité du réseau de télécommunications (100) à appliquer ou à utiliser le premier mode de fonctionnement du plan utilisateur et/ou le second mode de fonctionnement du plan utilisateur, ce qui entraîne l'application soit du premier mode de fonctionnement du plan utilisateur, soit du second mode de fonctionnement du plan utilisateur, conformément aux informations de capacité de réseau entre le réseau de télécommunications (100) et l'autre réseau de télécommunications (200).

8. Procédé selon l'une des revendications précédentes, dans lequel un autre réseau de télécommunications (200), connecté au réseau de télécommunications (100), sert l'équipement utilisateur (20), notamment comme réseau domestique, dans lequel, concernant des données du plan utilisateur échangées entre l'équipement utilisateur (20) et l'autre réseau de télécommunications (200), au moins soit le premier mode de fonctionnement du plan utilisateur, soit le second mode de fonctionnement du plan utilisateur peut être utilisé pour une technologie d'accès donnée,
dans lequel l'équipement utilisateur (20) transmet les informations de capacité (320) également à l'autre réseau de télécommunications (200), les informations de capacité (320) étant liées à la capacité de l'équipement utilisateur (20) à appliquer ou à utiliser le premier mode de fonctionnement du plan utilisateur et/ou le second mode de fonctionnement du plan utilisateur, ce qui entraîne l'application soit du premier mode de fonctionnement du plan utilisateur, soit du second mode de fonctionnement du plan utilisateur, conformément aux informations de capacité (320) entre l'équipement utilisateur (20) et l'autre réseau de télécommunications (200).

9. Procédé selon l'une des revendications précédentes, dans lequel
- l'équipement utilisateur (20) ajoute des informations d'en-tête de routage par segments au trafic de liaison montante selon une logique signalée par le réseau de télécommunications (100), dans lequel en particulier des informations d'en-tête de routage par segments spécifiques sont ajoutées et/ou une logique de traitement de paquets de données appliquée à un trafic spécifique dans le cas où un moment donné et/ou un lieu donné et/ou des conditions de réseau données sont satisfaits, et/ou
- l'équipement utilisateur (20) supprime des informations d'en-tête de routage par segments spécifiques et applique une logique de traitement de paquets de données, en particulier pour un trafic spécifique dans le cas où un moment donné et/ou un emplacement donné et/ou des conditions de réseau données sont satisfaits.

10. Équipement utilisateur (20) destiné à être utilisé avec au moins un réseau de télécommunications (100), dans lequel l'équipement utilisateur (20) est connecté au réseau de télécommunications (100) à l'aide d'un réseau d'accès (110) du ou affecté à ou associé au réseau de télécommunications (100) et le réseau de télécommunications (100) comprenant en outre un réseau central (120) auquel l'équipement utilisateur (20) est connecté,
dans lequel l'équipement utilisateur (20) est utilisé avec le réseau de télécommunications (100) au moyen de la transmission et/ou de la réception de données de plan utilisateur et de données de plan de commande, dans lequel, concernant des données de plan utilisateur échangées entre l'équipement utilisateur (20) et le réseau de télécommunications (100), au moins un premier mode de fonctionnement du plan utilisateur ou un second mode de fonctionnement du plan utilisateur peut être utilisé pour une technologie d'accès donnée, dans lequel le second mode de fonctionnement du plan utilisateur est un second mode de fonctionnement du plan utilisateur lié au routage par segments,
dans lequel l'équipement utilisateur (20) est configuré de telle sorte que :
- l'équipement utilisateur (20) transmet des informations de capacité (320) au réseau de télécommunications (100), les informations de capacité (320) étant liées à une capacité de l'équipement utilisateur (20) à appliquer ou à utiliser le premier mode de fonctionnement du plan utilisateur et/ou le second mode de fonctionnement du plan utilisateur,
- le premier mode de fonctionnement du plan utilisateur ou le second mode de fonctionnement du plan utilisateur est appliqué conformément aux informations de capacité (320), dans lequel, dans le cas où le second mode de fonctionnement du plan utilisateur est utilisé, au moins l'un parmi ce qui suit s'applique :
- l'équipement utilisateur (20) est configuré pour se voir signaler une fonctionnalité liée au routage par segments à partir du réseau de télécommunications (100),
- l'équipement utilisateur (20) est configuré pour ajouter des informations d'en-tête de routage par segments au trafic de liaison montante,
- l'équipement utilisateur (20) est configuré pour supprimer les informations d'en-tête de routage par segments du trafic de liaison descendante,
- l'équipement utilisateur (20) est configuré pour appliquer, au trafic de liaison montante ou de liaison descendante, une logique de traitement de paquets au trafic correspondant,
- l'équipement utilisateur (20) est configuré pour appliquer un mappage entre des sessions d'unités de données par paquets, des flux de qualité de service ou des sous-flux de qualité de service et/ou un trafic d'application et un ou plusieurs éléments d'informations d'en-tête de routage par segments.

11. Système ou réseau de télécommunications (100) pour utiliser un équipement utilisateur (20) avec le réseau de télécommunications (100), dans lequel l'équipement utilisateur (20) est connecté au réseau de télécommunications (100) à l'aide d'un réseau d'accès (110) du ou affecté à ou associé au réseau de télécommunications (100) et le réseau de télécommunications (100) comprenant en outre un réseau central (120) auquel l'équipement utilisateur (20) est connecté,
dans lequel l'équipement utilisateur (20) est utilisé avec le réseau de télécommunications (100) au moyen de la transmission et/ou de la réception de données de plan utilisateur et de données de plan de commande, dans lequel, concernant des données de plan utilisateur échangées entre l'équipement utilisateur (20) et le réseau de télécommunications (100), au moins un premier mode de fonctionnement du plan utilisateur ou un second mode de fonctionnement du plan utilisateur peut être utilisé pour une technologie d'accès donnée, dans lequel le second mode de fonctionnement du plan utilisateur est un second mode de fonctionnement du plan utilisateur lié au routage par segments,
dans lequel le système ou réseau de télécommunications (100) est configuré de telle sorte que :
- l'équipement utilisateur (20) transmet des informations de capacité (320) au réseau de télécommunications (100), les informations de capacité (320) étant liées à une capacité de l'équipement utilisateur (20) à appliquer ou à utiliser le premier mode de fonctionnement du plan utilisateur et/ou le second mode de fonctionnement du plan utilisateur,
- le premier mode de fonctionnement du plan utilisateur ou le second mode de fonctionnement du plan utilisateur est appliqué conformément aux informations de capacité (320), dans lequel, dans le cas où le second mode de fonctionnement du plan utilisateur est utilisé, le réseau de télécommunications (100) est configuré pour signaler à l'équipement utilisateur (20) une fonctionnalité liée au routage par segments.

12. Programme comprenant un code de programme lisible par ordinateur qui, lorsqu'il est exécuté sur un ordinateur et/ou sur un équipement utilisateur (20) et/ou sur un noeud de réseau d'un réseau de télécommunications (100), notamment une fonction de plan de commande et/ou une fonction de plan utilisateur, ou en partie sur l'équipement utilisateur (20) et/ou en partie sur le noeud de réseau d'un réseau de télécommunications (100), notamment la fonction de plan de commande et/ou la fonction de plan utilisateur, amène l'ordinateur et/ou l'équipement utilisateur (20) et/ou le noeud de réseau du réseau de télécommunications (100) à mettre en oeuvre un procédé selon l'une des revendications 1 à 9.

13. Support lisible par ordinateur comprenant des instructions qui, lorsqu'elles sont exécutées sur un ordinateur et/ou sur un équipement utilisateur (20) et/ou sur un noeud de réseau d'un réseau de télécommunications (100), notamment une fonction de plan de commande et/ou une fonction de plan utilisateur, ou en partie sur l'équipement utilisateur (20) et/ou en partie sur le noeud de réseau d'un réseau de télécommunications (100), notamment la fonction de plan de commande et/ou la fonction de plan utilisateur, amènent l'ordinateur et/ou l'équipement utilisateur (20) et/ou le noeud de réseau du réseau de télécommunications (100) à mettre en oeuvre un procédé selon l'une des revendications 1 à 9.
